# EUROPÄISCHE PATENTSCHRIFT

(11) **EP 3 622 875 B1**
(45) Veröffentlichungstag und Bekanntmachung des Hinweises auf die Patenterteilung: **09.11.2022**
(21) Anmeldenummer: 19194825.6
(22) Anmeldetag: 02.09.2019
(51) Int. Cl.: A47L 15/00, A47L 15/42

(54) **GESCHIRRSPÜLMASCHINE, INSBESONDERE HAUSHALTSGESCHIRRSPÜLMASCHINE, SOWIE VERFAHREN ZUM BETRIEB EINER GESCHIRRSPÜLMASCHINE**
DISHWASHER, ESPECIALLY A DOMESTIC DISHWASHER, AND METHOD FOR OPERATING A DISHWASHER
LAVE-VAISSELLE, EN PARTICULIER LAVE-VAISSELLE MÉNAGER, AINSI QUE PROCÉDÉ DE FONCTIONNEMENT D'UN LAVE-VAISSELLE

(30) Priorität: 11.09.2018 DE 102018122125
(43) Veröffentlichungstag der Anmeldung: 18.03.2020
(73) Patentinhaber: Miele & Cie. KG, 33332 Gütersloh (DE)
(72) Erfinder: Bertram, Andre, 33609 Bielefeld (DE); Dahms, Tobias, 30519 Hannover (DE); Dettmer, Martin, 33607 Bielefeld (DE); Kornfeld, André, 33378 Rheda-Wiedenbrück (DE); Nierling, Andreas, 49326 Melle (DE); Schröder, Nils, 33611 Bielefeld (DE); Stanke, Benjamin, 33604 Bielefeld (DE); Chluba, Nils, 31688 Nienstädt (DE); Steinmeier, Ralph, 32052 Herford (DE)

(56) Entgegenhaltungen:
- EP-A2- 2 206 824
- EP-A2- 2 322 072
- WO-A1-2013/098245
- CH-A2- 699 692
- DE-A1-102013 019 185

## Beschreibung

Die Erfindung betrifft eine Geschirrspülmaschine, insbesondere eine Haushaltsgeschirrspülmaschine, mit einem einen Spülraum bereitstellenden Spülbehälter, der der Aufnahme von zu reinigendem Spülgut dient, und einer Wärmepumpeneinrichtung, die einen Verdampfer aufweist, der innerhalb eines Wassertanks angeordnet ist. Ferner betrifft die Erfindung ein Verfahren zum Betrieb einer Geschirrspülmaschine.

Eine gattungsgemäße Geschirrspülmaschine ist aus der EP 2322072 A2 bekannt.

Die vorbekannte Geschirrspülmaschine verfügt über einen Spülbehälter, der einen Spülraum bereitstellt. Dieser ist verwenderseitig über eine Beschickungsöffnung zugänglich, die mittels einer Spülraumtür fluiddicht verschließbar ist. Im bestimmungsgemäßen Verwendungsfall dient der Spülbehälter der Aufnahme von zu reinigendem Spülgut.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülgutes mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels einer Ablaufpumpe verworfen und abgepumpt.

Die aus der EP 2322072 A2 bekannte Geschirrspülmaschine verfügt darüber hinaus über eine Wärmepumpeneinrichtung, bei der einem Flüssigkeitsreservoir Wärmeenergie entzogen wird. Die EP 2322072 A2 sieht zu diesem Zweck einen Latentwärmespeicher vor, der den Verdampfer der Wärmepumpeneinrichtung beherbergt. Im Betriebsfall kommt es infolge eines Wärmeenergieentzugs zu einer Abkühlung des im Latentwärmespeicher bevorrateten Wärmeträgermedium. Eine solche Abkühlung kann bis zur Vereisung des Wärmeträgermediums vorgenommen werden.

Von grundsätzlicher Problematik bei der Verwendung einer derartigen Wärmepumpeneinrichtung ist, dass ein bestimmungsgemäßer Einsatz der Geschirrspülmaschine unter gleichzeitiger Nutzung der Wärmepumpeneinrichtung energetisch nur dann sinnvoll ist, wenn das im Latentwärmespeicher bevorratete Wärmeträgermedium eine gewisse Mindesttemperatur aufweist. Sollte das Wärmeträgermedium nach einer vorangegangenen Geschirrspülmaschinenbenutzung noch zu kühl oder sogar gefroren sein, muss mit einem bestimmungsgemäßen Einsatz der Wärmepumpeneinrichtung bis zum Erreichen der Mindesttemperatur des Wärmeträgermediums gewartet werden, was durchaus 24 Stunden in Anspruch nehmen kann. Eine bestimmungsgemäße Verwendung der Geschirrspülmaschine unter Einsatz der Wärmepumpeneinrichtung ist mithin pro Tag nur einmal möglich. Die EP 2322072 A2 sieht darüber hinaus vor, im Programmabschnitt TROCKNEN ein Fluid zwischen einem mit dem Latentwärmespeicher in thermischen Kontakt stehenden Wärmetauscher und einem mit dem Spülbehälter in thermischen Kontakt stehenden Wärmetauscher zirkulieren zu lassen. Hierdurch kann Wärme vom Spülbehälter zum Latentwärmespeicher geleitet werden, außerdem wird die Kondensationstrocknung im Spülbehälter unterstützt. Dies verkürzt zwar die thermische Regeneration des Latentwärmespeicher. Dennoch wäre eine noch schnellere thermische Regeneration wünschenswert.

Die WO 2013/098245 A1 offenbart eine Geschirrspülmaschine mit einem Türöffnungsmechanismus zur automatischen spaltweisen Türöffnung.

Die EP 2206824 A2 offenbart einen Geschirrspüler mit einer Wärmepumpeneinrichtung, mit der einem als geschlossenen Tank ausgebildeten Flüssigkeitsreservoir Wärmeenergie entzogen und wird dem Spülbehälter zugeführt werden kann.

Ausgehend davon ist es die **Aufgabe** der Erfindung, eine Geschirrspülmaschine und ein Verfahren zum Betrieb einer Geschirrspülmaschine vorzuschlagen, wodurch ein verbesserter Wärmeeintrag in den Wärmespeicher der Wärmepumpeneinrichtung ermöglicht wird, so dass eine schnellere thermische Regeneration des Wärmespeichers bewirkt werden kann.

Zur **Lösung** dieser Aufgabe wird mit der Erfindung eine Geschirrspülmaschine und ein Verfahren zum Betrieb einer Geschirrspülmaschine mit den Merkmalen der unabhängigen Ansprüche vorgeschlagen.

Die erfindungsgemäße Geschirrspülmaschine umfasst einen einen Spülraum bereitstellenden Spülbehälter, der der Aufnahme von zu reinigendem Spülgut dient und zur Beschickung mit Spülgut eine Beschickungsöffnung aufweist, die mittels einer beispielsweise verschwenkbar gelagerten Tür verschließbar, insbesondere weitgehend fluiddicht verschließbar ist. Mit der Geschirrspülmaschine ist ein Spülprogramm durchführbar, welches mehrere Programmabschnitte umfasst, insbesondere den Programmabschnitt REINIGEN und den Programmabschnitt TROCKNEN. Mit Abschluss des Programmabschnitts TROCKNEN endet das Spülprogramm und das Spülgut kann der Geschirrspülmaschine vom Benutzer in gereinigtem und trockenen Zustand entnommen werden.

Die Geschirrspülmaschine umfasst darüber hinaus einen Wärmespeicher sowie eine Wärmepumpeneinrichtung, die dazu eingerichtet ist, dem Wärmespeicher zumindest während eines Zeitabschnitts innerhalb des Programmabschnitts REINIGEN Wärme zu entziehen und der Spülflüssigkeit zuzuführen. Der Wärmespeicher kann beispielsweise ein mit einem fluiden Wärmespeichermedium, beispielsweise Wasser, füllbarer oder gefüllter Tank sein. Beim Betrieb der Wärmepumpeneinrichtung wird der Wärmespeicher stark abgekühlt, etwa bis zum zumindest teilweisen Gefrieren des darin gespeicherten Wärmespeichermediums.

Typischerweise umfasst die Wärmepumpeneinrichtung einen Wärmeübertragungsmittelkreislauf sowie einen Verdampfer, der dazu eingerichtet ist, das Wärmeübertragungsmittel zu erwärmen und das Wärmespeichermedium abzukühlen. Hierzu ist der Verdampfer beispielsweise innerhalb des Wärmespeichers angeordnet. Außerdem umfasst die Wärmepumpeneinrichtung typischerweise einen Verflüssiger, welcher beispielsweise im Spülraum oder im Umwälzkreislauf der Spülflüssigkeit angeordnet ist, und welcher dazu eingerichtet ist, die Spülflüssigkeit zu erwärmen und das Wärmeübertragungsmittel abzukühlen. Somit kann Wärmeenergie mittels der Wärmepumpeneinrichtung vom Wärmespeichermedium auf die Spülflüssigkeit übertragen werden.

Außerdem weist die Geschirrspülmaschine eine Wärmerückgewinnungseinrichtung auf, welche dazu eingerichtet ist, dem Spülraum Wärme zu entziehen und diese dem Wärmespeicher zuzuführen. Hierdurch kann der durch Betrieb der Wärmepumpeneinrichtung stark abgekühlte Wärmespeicher bzw. das darin gespeicherte Wärmespeichermedium mittels der Wärme aus dem Spülraum wieder erwärmt werden. Dies erlaubt es, die Wärmepumpeneinrichtung und damit die Geschirrspülmaschine schneller wieder in einen Zustand zu versetzen, in dem diese effizient betrieben werden kann.

Erfindungsgemäß weist die Geschirrspülmaschine darüber hinaus eine Türsteuerungsvorrichtung auf, welche dazu eingerichtet ist, die Tür zur Erwärmung der Temperatur im Spülraum nach einer vorgegebenen Zeitdauer und/oder temperaturgesteuert nach Abschluss des Spülprogramms automatisch zumindest spaltweise zu öffnen. Hierdurch wird vermieden, dass der Spülraum durch den Betrieb der Wärmerückgewinnungseinrichtung zu stark abkühlt. Außerdem wird erreicht, dass der Wärmerückgewinnungseinrichtung ein größeres Energiereservoir zur Verfügung steht. Der während des Spülprogramms durch Betrieb der Wärmepumpeneinrichtung stark abgekühlte Wärmespeicher kann dadurch schneller wieder erwärmt werden, so dass die Wärmepumpeneinrichtung schneller wieder effizient nutzbar ist.

Verfahrensseitig vorgeschlagen wird ein Verfahren zum Betrieb einer Geschirrspülmaschine, welche einen einen Spülraum bereitstellenden Spülbehälter umfasst, der der Aufnahme von zu reinigendem Spülgut dient und zur Beschickung mit Spülgut eine Beschickungsöffnung aufweist, die mittels einer, insbesondere verschwenkbar gelagerten Tür verschließbar ist, sowie eine Wärmepumpeneinrichtung und einen Wärmespeicher. Das Verfahren umfasst dabei die zeitlich in der angegebenen Reihenfolge ablaufenden Schritte:
- Starten eines Spülprogramms
- Durchführen eines Programmschnitts REINIGEN, wobei das Spülgut mit Spülflüssigkeit gespült wird, wobei die Wärmepumpeneinrichtung dem Wärmespeicher zeitweise Wärme entzieht und der Spülflüssigkeit zuführt,
- Durchführen eines Programmschnitts TROCKNEN
- Abschließen des Spülprogramms
- Automatisches zumindest spaltweites Öffnen der Tür zur Erwärmung der Temperatur im Spülraum nach einer vorgegebenen Zeitdauer und/oder temperaturgesteuert nach Abschluss des Spülprogramms

Die Türsteuerungsvorrichtung ist somit dazu eingerichtet, einen Türöffnungsvorgang zu generieren, der nach Abschluss des Spülprogramms, also nachdem der letzte Programmabschnitt des Spülprogramms, nämlich der Programmabschnitt TROCKNEN beendet wurde, und damit insbesondere außerhalb eines Spülprogramms erfolgt. Am Ende des Spülprogramms bzw. des Programmabschnitts TROCKNEN wird dem Benutzer vorzugsweise, wie allgemein üblich, die Beendigung des Spülprogramms beispielsweise visuell oder akustisch signalisiert. Dieses Signal impliziert die Information, dass das zuvor im Spülprogramm gespülte und getrocknete Spülgut zur Ausräumung aus der Geschirrspülmaschine bereitsteht. Erst zeitlich danach wird die Geschirrspülmaschinentür mittels der Türsteuerungsvorrichtung aus der geschlossenen Stellung in eine zumindest spaltweise geöffnete Stellung überführt.

Die Geschirrspülmaschine weist eine Wärmerückgewinnungseinrichtung auf, welche dazu eingerichtet ist, dem Spülraum - insbesondere nach Abschluss des Spülprogramms, also nachdem der letzte Programmabschnitt TROCKNEN beendet wurde, und damit insbesondere außerhalb eines Spülprogramms - Wärme zu entziehen und dem Wärmespeicher zuzuführen. Die Wärmerückgewinnungseinrichtung wird insbesondere unmittelbar im Anschluss an das beendete Spülprogramm betrieben. Der Betrieb der Wärmerückgewinnungseinrichtung kann insbesondere bereits während des Spülprogrammabschnitts TROCKNEN gestartet und über das Ende des Spülprogrammabschnitts TROCKNEN und damit des Spülprogramms hinaus fortgesetzt werden. Der Betrieb kann dabei auch bei geöffneter Tür und/oder ohne Beladung, d.h. ohne sich im Spülbehälter befindliches Spülgut, also etwa nach Ausräumung des sauberen und trockenen Spülguts erfolgen.

Der Zeitpunkt des Türöffnungsvorgangs kann dabei beispielsweise zeitgesteuert und/oder temperaturgesteuert ausgebildet sein.

Gemäß einem weiteren Merkmal der Erfindung unterbleibt eine automatische Türöffnung für eine sich an den Abschluss des Programmabschnitts TROCKNEN und damit den Abschluss des Spülprogramms unmittelbar anschließende vorgegebene Zeitdauer, welche vorzugsweise 0,25 bis 3 Stunden, insbesondere 0,5 bis 2 Stunden beträgt. In diesem Zeitraum steht der Wärmerückgewinnungseinrichtung aufgrund der im Spülraum vorhandenen Restwärme eine große Wärmemenge zur Verfügung. Somit kann die Wärmerückgewinnung besonders effizient und schnell erfolgen. Aufgrund des Betriebs der Wärmerückgewinnungseinrichtung sinkt die Temperatur im Spülraum, während die Temperatur im Wärmespeicher ansteigt. Nach Ablauf der vorgegebenen Zeitdauer erfolgt die automatische Türöffnung, um die Temperaturabsenkung im Spülraum zu begrenzen und um für die weitere Zuführung von Wärmeenergie in den Wärmespeicher ein größeres Wärmereservoir bereitzustellen. Auch nach der Türöffnung bleibt die Wärmerückgewinnungseinrichtung vorzugsweise in Betrieb.

Die Länge der vorgegebenen Zeitdauer, während der eine automatische Türöffnung nach Abschluss des Programmabschnitts TROCKNEN bzw. Abschluss des Spülprogramms unterbleibt, kann insbesondere abhängig vom gewählten bzw. durchlaufenen Spülprogramm bestimmt sein. Typischerweise können vom Benutzer unterschiedliche Spülprogramme eingestellt werden, beispielsweise ein Niedrigtemperaturprogramm, ein ECO-Programm, ein Automatikprogramm oder ein Hochtemperaturprogramm. Für jede Art von Spülprogramm kann dabei eine individuelle Zeitdauer vorgegeben sein. Damit kann der Tatsache, dass für unterschiedliche Arten von Spülprogrammen die nach Abschluss des Spülprogramms im Spülraum vorhandene Restwärme unterschiedlich groß ausfällt, auf vergleichsweise einfache Weise Rechnung getragen werden.

Gemäß einem weiteren Merkmal kann die automatische Türöffnung nach Abschluss des Programmabschnitts TROCKNEN und damit Abschluss des Spülprogramms abhängig von einer Spülraumtemperaturmessung erfolgen. Insbesondere kann die automatische Türöffnung erfolgen, sobald die Spülraumtemperatur einen vorgegebenen Minimalwert unterschreitet. Für die Bestimmung der Spülraumtemperatur kann zur Vermeidung von zusätzlichem Aufwand ein an sich nach Art und Anordnung üblicher und sowieso vorhandener, nämlich innerhalb des Spülbehälters, insbesondere im Sammeltopf angeordneter Temperatursensor eingesetzt werden, der während eines wasserführenden Spülprogrammabschnitts auch zur Überwachung der Temperatur der Spülflotte dient. Bei dem vorgegebenen Minimalwert kann es sich um einen in der Steuerung des Geschirrspülers fest vorgegebenen oder vorgebbaren Wert handeln. Der vorgegebene Minimalwert kann beispielsweise aber auch durch die Umgebungstemperatur, also einer der Temperatur in der Umgebung also dem Aufstellungsraum entsprechende Temperatur, gegeben sein oder von dieser abhängen. So kann die automatische Türöffnung beispielsweise ausgelöst werden, wenn die Spülraumtemperatur niedriger oder um einen vorgegebenen Wert, beispielsweise einem Wert zwischen 0 und 3 K, niedriger ist als die Umgebungstemperatur. Zur Bestimmung der Umgebungstemperatur kann die Geschirrspülmaschine einen weiteren, etwa am Gehäuse der Geschirrspülmaschine angeordneten, Temperatursensor aufweisen, der zur Erfassung einer Lufttemperatur außerhalb der Geschirrspülmaschine, also im Aufstellungsraum der Geschirrspülmaschine geeignet ist. Eine alternative Lösung, die keinen weiteren Temperatursensor erfordert, sieht vor, dass eine zu Beginn des Spülprogramms gemessene Spülraumtemperatur abgespeichert und als Umgebungstemperatur verwendet wird. Somit kann auch hierfür der sowieso vorhandene, nämlich innerhalb des Spülbehälters, insbesondere im Sammeltopf angeordnete Spülflottentemperatursensor eingesetzt werden.

Die Türsteuerungsvorrichtung ist vorzugsweise dazu eingerichtet, die geöffnete Tür oder zumindest die spaltweise geöffnete Tür selbsttätig zu schließen. Es sind somit insbesondere Schließmittel, etwa eine Zugstange, vorhanden, mit der die Tür aus ihrer insbesondere spaltweisen offenen Stellung zurück in die verschlossene Stellung verbracht, insbesondere gezogen werden kann. Somit wird die vom Benutzer beispielsweise zwecks Ausräumung des Spülguts geöffnete und nicht wieder verschlossene Tür automatisch geschlossen, insbesondere um eine etwaig noch vorhandene Restwärme im Spülraum bestmöglich für die Wärmerückgewinnung zu nutzen. Außerdem kann die Tür, nachdem sie nach Abschluss des Spülprogramms automatisch geöffnet wurde, zu einem späteren Zeitpunkt wieder automatisch geschlossen werden.

Somit ist die Türsteuerungsvorrichtung insgesamt vorzugsweise dazu eingerichtet,
- die Tür unmittelbar nach Abschluss der Spülprogramms zunächst während einer ersten Phase geschlossen zu halten und vorzugsweise im Falle eines manuellen Öffnens durch den Benutzer gegebenenfalls wieder selbsttätig zu schließen,
- anschließend an die erste Phase die Tür selbststätig zu öffnen und während einer zweiten Phase geöffnet zu halten und vorzugsweise im Falle eines manuellen Schließens durch den Benutzer gegebenenfalls wieder selbsttätig zu öffnen, und
- vorzugsweise die Tür nach Abschluss der zweiten Phase selbsttätig zu schließen.

Es ist darüber hinaus vorteilhaft, wenn die Temperatur im Wärmespeicher erfasst wird. Dies erlaubt eine optimierte Nutzung der Wärmerückgewinnung und der automatischen Türöffnung und -schließung. So kann etwa der Betrieb der Wärmerückgewinnungseinrichtung beendet und/oder die Tür selbsttätig geschlossen werden, wenn die Temperatur im Wärmespeicher einen vorgegebenen Wert, welcher beispielsweise einer Mindesttemperatur entspricht, bei der die Verwendung der Wärmepumpeneinrichtung in einem nachfolgenden Spülprogram in hinreichend effizienter Weise möglich ist, überschreitet. Alternativ kann der Betrieb der Wärmerückgewinnungseinrichtung beendet und/oder die Tür selbsttätig geschlossen werden, wenn die der zeitliche Temperaturgradient, also die Erwärmungsgeschwindigkeit, im Wärmespeicher einen vorgegebenen Wert unterschreitet. Insgesamt wird durch diese Maßnahmen ein überflüssiger und energetisch nachteiliger weiterer Betrieb der Wärmerückgewinnungseinrichtung bzw. ein überflüssiges, vom Benutzer möglicherweise als störend empfundenes weiteres Offenstehen der Geschirrspülertür vermieden.

Um die Trocknung des Spülguts zu verbessern und/oder zu verkürzen kann die Türsteuerungsvorrichtung im Übrigen auch in an sich bekannter Weise dazu eingerichtet sein, die Tür im Programmabschnitt TROCKNEN automatisch zumindest spaltweise zu öffnen. In diesem Fall ist die Türsteuerungsvorrichtung vorzugsweise jedoch außerdem dazu eingerichtet, die spaltweise geöffnete Tür anschließend nach Ablauf einer vorgegebenen Öffnungsdauer und insbesondere vor oder spätestens zum Abschluss des Programmabschnitts TROCKNEN wieder selbsttätig zu schließen. Vorzugsweise beträgt die Öffnungsdauer während des Programmabschnitts TROCKNEN weniger als 40 Minuten. Dadurch bleibt eine vergleichsweise große Menge an Restwärme im Spülraum erhalten, welche in der bereits beschriebenen Weise dem Wärmespeicher zugeführt werden kann.

Für die Wärmerückgewinnungseinrichtung sind unterschiedliche Ausführungsvarianten denkbar, von denen im Folgenden zwei Ausführungsvarianten beispielhaft beschrieben werden.

So kann die Wärmerückgewinnungseinrichtung gemäß einem ersten Ausführungsbeispiel einen mit dem Spülbehälter thermisch gekoppeltem und diesem nebengeordneten Wärmetauscher umfassen Dieser ist vorzugsweise benachbart zu einer in Beschickungsrichtung der Geschirrspülmaschine seitlichen Spülbehälterwand angeordnet. Alternativ kann der Wärmetauscher auch innerhalb des Spülbehälters angeordnet sein. In jedem Fall steht er in strömungstechnischer Verbindung mit dem Wärmespeicher, so dass das fluide Wärmespeichermedium, welches insbesondere als Wasser ausgebildet sein kann, aus dem Wärmespeicher in den Wärmetauscher überführt werden kann und umgekehrt.

Es kann ein Fördermittel, insbesondere eine Pumpe vorhanden sein, mit der das Wärmespeichermedium aus dem Wärmespeicher über eine erste Leitung in den Wärmetauscher gefördert werden kann. Das Wärmespeichermedium kann über eine zweite Leitung vom Wärmetauscher zurück in den Wärmespeicher geleitet werden und damit insgesamt im Kreislauf geführt sein, oder stattdessen über dieselbe, das heißt die erste Leitung vom Wärmetauscher zurück in den Wärmespeicher geleitet werden. Letzteres erfolgt dabei in einfachster Weise vorzugsweise schwerkraftgetrieben.

Die strömungstechnische Verbindung von Wärmespeicher und Wärmetauscher ermöglicht es, während der Durchführung und/oder nach Ablauf eines Spülprogramms im Wärmespeicher befindliches Wärmespeichermedium dadurch thermisch zu regenerieren, d.h. aufzuwärmen, dass es in den spülbehälternahen oder im Spülbehälter befindlichen Wärmetauscher überführt wird, wo dann ein Wärmeübertrag vom warmen Spülbehälter, d.h. aus der vom Spülbehälter bevorrateten noch warmen Beladung und/oder Spülflotte und/oder der warmen Spülraumluft auf das im Wärmetauscher befindliche Wärmespeichermedium stattfinden kann. Das so aufgewärmte Wärmespeichermedium kann dann aus dem Wärmetauscher zurück in den Wärmespeicher überführt werden, was zu einem schnelleren Erwärmen oder Auftauen von sich dort befindlichem zuvor stark abgekühltem Wärmespeichermedium, beispielsweise Eis führt, so dass im Ergebnis eine schnellere thermische Regeneration durch Wärmerückgewinnung erreicht ist. Dabei wird die Befüllung des Wärmetauscher mit aus dem Wärmespeicher stammendem Wärmespeichermedium einschließlich der Rückführung von im Wärmetauscher erwärmtem Wärmespeichermedium zurück in den Wärmespeicher wiederholt durchgeführt, was zu einer deutlichen Reduzierung der Regenerationszeit mit dem Ergebnis führt, dass die erfindungsgemäß ausgebildete Geschirrspülmaschine sehr viel früher auch mit bestimmungsgemäßer Nutzung der Wärmepumpeneinrichtung wieder einsetzbar ist, als dies vorbekannte Geschirrspülmaschinen gestatten.

Der Wärmetauscher kann außenseitig am Spülbehälter angeordnet sein. Er kann insbesondere als Wasserbehälter ausgebildet sein. Dabei kann es sich bei dem Wasserbehälter um einen Frischwassertank, eine Wassertasche oder dgl. Behältnis handeln, das ohnehin schon als Baukomponente der Geschirrspülmaschine vorhanden ist. So sind beispielsweise aus dem Stand der Technik sogenannte Wassertaschen bekannt, die am Ende eines Spülprogramms mit Frischwasser aufgefüllt werden und dann zu Beginn eines nachfolgenden Spülprogramms auf Raumtemperatur erwärmtes Frischwasser beherbergen, das in den Spülraum der Geschirrspülmaschine eingelassen wird. Diese ohnehin schon vorhandene Wassertasche kann beispielsweise als Wasserbehälter bzw. Wärmetauscher im Sinne der erfindungsgemäßen Ausgestaltung genutzt werden.

Um einen möglichst guten Wärmeübertrag vom Spülbehälter, dessen Beladung und/oder aus der Spülflotte auf das im Wärmetauscher befindliche Wärmespeichermedium, etwa Wasser, zu ermöglichen, sind der Spülbehälter und der Wärmetauscher thermisch miteinander gekoppelt. Dies kann in einfachster Weise dadurch erreicht werden, dass der Wärmetauscher ohne Ausbildung einer thermischen Trennung direkt außenseitig an der Außenwand des Spülbehälters angeordnet ist, so dass ein möglichst großflächiger Kontaktbereich zwischen Spülbehälterwand und daran anliegender Wärmetauscherwand erreicht ist. Bevorzugt ist in diesem Zusammenhang ferner, den Wärmetauscher aus einem dünnwandigen Kunststoffmaterial zu bilden, was ebenfalls förderlich für den gewünschten Wärmeübergang ist.

Der Wärmespeicher ist indes gemäß einem weiteren Merkmal der Erfindung thermisch vom Spülbehälter entkoppelt. Dies deshalb, weil es im bestimmungsgemäßen Verwendungsfall zum Einfrieren des Wärmespeichers kommt und es vermieden werden soll, das der eingefrorene Wärmespeicher dem Spülbehälter ungewollt Wärmeenergie entzieht. Denn während beispielsweise eine Aufheizphase der Spülflotte, d.h. bei laufendem Betrieb der Wärmepumpeneinrichtung soll zur möglichst schnellen Erreichung der Zieltemperatur der Spülflotte dem Spülbehälter keine Wärmeenergie entzogen werden. Erst zum Ende eines Spülprogramms, wenn die aufgeheizte Spülflotte für eine Reinigung des Spülguts nicht mehr benötigt wird, soll ein Wärmeübergang von der noch warmen Spülflotte auf den Wärmespeicher stattfinden, was erfindungsgemäß mit Hilfe des dem Spülbehälter nebengeordneten oder im Spülbehälter angeordneten Wärmetauscher stattfindet, indem in schon vorbeschriebener Weise aus dem Wärmespeicher stammendes kaltes Wasser in den Wärmetauscher überführt und nach einer dortigen Erwärmung zurück in den Wärmespeicher geleitet wird.

Wenn Wasser als Wärmespeichermedium eingesetzt wird kann auch vorgesehen sein, dass der Wärmetauscher und/oder der Wärmespeicher an den Spülbehälter strömungstechnisch angeschlossen sind/ist. Gemäß dieser Ausgestaltung ist vorgesehen, dass nicht nur Wasser aus dem Wärmespeicher in den Wärmetauscher und umgekehrt geführt werden kann, sondern dass wahlweise auch Wasser aus dem Wärmespeicher in den Spülbehälter und/oder Wasser aus dem Wärmetauscher in den Spülbehälter überführt werden kann. Es ist insoweit möglich, verschiedenste Wasserwege zu nutzen und somit den gewünschten Wärmeübergang noch weiter zu verbessern. Ferner gestattet es die strömungstechnische Verbindung zwischen Spülbehälter und Wärmetauscher und/oder Wärmespeicher eine im Spülbehälter bereits befindliche Sensorik, wie insbesondere Temperatursensorik zu nutzen, um Messwerte bezüglich des aus dem Wärmespeicher und/oder aus dem Wärmetauscher stammenden Wassers zu erfassen. Dies gestattet eine optimierte Verfahrensdurchführung unter Nutzung der Gerätsteuerelektronik.

Gemäß einem weiteren Merkmal der Erfindung ist vorgesehen, dass der Wärmetauscher und/oder der Wärmespeicher an einen Frischwasseranschluss strömungstechnisch angeschlossen sind/ist. Auch durch diese konstruktive Maßnahme werden unterschiedliche Verfahrensweisen zum Betrieb der Geschirrspülmaschine ermöglicht. So ist es wahlweise gestattet, den Wärmespeicher und/oder den Wärmetauscher im Betriebsfall mit Frischwasser zu befüllen. Und dies in Kombination oder alternativ zu einer herkömmlichen Frischwasserbeschickung des Spülbehälters.

Gemäß einem weiteren Merkmal der Erfindung ist vorgesehen, dass der Wärmetauscher auf seiner dem Spülbehälter abgewandten Seite, also auf seiner dem Gehäuse der Geschirrspülmaschine zugewandten Seite, mit einer Dämmschicht versehen ist. Hierdurch wird eine etwaige außenseitige Betauung verhindert.

Bei diesem ersten Ausführungsbeispiel der Wärmerückgewinnungseinrichtung wird also nach Abschluss eines Spülprogramms die Wärmerückgewinnungseinrichtung betrieben, wobei im Wärmespeicher befindliches Wärmespeichermedium zumindest teilweise abgeführt, dem Wärmetauscher zugeführt und anschließend in den Wärmespeicher rücküberführt wird. Dieser Betrieb kann dabei auch bereits während der Durchführung des Spülprogramms, nämlich während des Programmabschnitts TROCKNEN oder bereits mit Beendigung des Programmabschnitts KLARSPÜLEN, begonnen und über den Abschluss des Spülprogramms hinaus fortgesetzt werden.

Dabei kann vorgesehen sein, dass das Wärmespeichermedium im Wärmetauscher für eine vorgebbare Verweildauer verbleibt. Alternativ kann auch eine bloße Durchführung von Wärmespeichermedium durch den Wärmetauscher vorgesehen sein, in welchem Fall aber eine bevorzugterweise mäanderförmige Durchlaufroute für das Wärmespeichermedium durch den Wärmetauscher hindurch vorgesehen ist, um so einen optimierten Wärmeübertrag auf das Wärmespeichermedium zu erreichen.

Gemäß einer weiteren Ausgestaltung kann auch vorgesehen sein, dass das Wärmespeichermedium im Wärmetauscher bis zum Erreichen einer vorgebbaren Temperatur verbleibt. In diesem Fall erfolgt also keine zeitgesteuerte Hindurchführung des Wärmespeichermedium durch den Wärmetauscher, sondern eine temperaturgesteuerte. Dabei kann die vorgebbare Temperatur für das Wärmespeichermedium beispielsweise mit 10°C bis 20°C gewählt werden.

Es kann auch vorgesehen sein, dass die Zuführung von Wärmespeichermedium aus dem Wärmespeicher in den Wärmetauscher wiederholt durchgeführt wird. Es erfolgt mithin nicht nur eine einmalige Überführung von Wasser aus dem Wärmespeicher in den Wärmetauscher und zurück in den Wärmespeicher, sondern es ist vielmehr eine wiederholte Überführung von Wärmespeichermedium vorgesehen, so dass ein möglichst großer Wärmeintrag in das Wärmespeichermedium stattfinden kann. Es können in diesem Zusammenhang Zyklen vorgesehen sein, wobei vorzugsweise eine vorgebbare Anzahl an Zyklen durchgeführt wird, bevor die erfindungsgemäße Verfahrensdurchführung beendet wird. In diesem Zusammenhang wird gemäß einem weiteren Merkmal vorgeschlagen, dass nach Erreichen der vorgebbaren Anzahl an Zyklen das als Wasser ausgebildete Wärmespeichermedium bis zum Beginn eines nachfolgenden Spülprogramms im Wärmetauscher verbleibt. Es wird so erreicht, dass das im Wärmetauscher befindliche Wasser durch die Umgebungsatmosphäre bis auf Raumtemperatur erwärmt werden kann. Das Wasser kann dann in den Spülbehälter entleert werden, so dass für das nachfolgende Spülprogramm dann schon zumindest teilweise auf Raumtemperatur erwärmte Spülflotte zur Verfügung steht, so dass im nachfolgenden Spülprogramm weniger Energie für ein Aufheizen der Spülflotte benötigt wird. Der entleerte Wärmetauscher kann dann mit Frischwasser befüllt werden.

In jedem Fall wird bei diesem ersten Ausführungsbeispiel der Wärmerückgewinnungseinrichtung nach Abschluss eines Spülprogramms die Wärmerückgewinnungseinrichtung wie vorstehend betrieben, wobei die Geschirrspülertür automatisch zumindest spaltweise geöffnet wird. Die durch die Tür im oberen Bereich bzw. durch den Türspalt in den Spülraum eindringende Umgebungsluft trifft auf die mit der anliegenden Wärmetauscherwand thermisch gekoppelten Spülbehälterwand, wird dabei aufgrund des kalten Wärmespeichermediums im Wärmetauscher stark abgekühlt und sinkt dadurch an der Spülbehälterwand entlang nach unten. Im unteren Bereich kann die abgekühlte Luft aus einer Entlüftungsöffnung und/oder durch den seitlichen Türspalt entweichen. Es bildet sich eine Konvektionsströmung aus, bei der weiter Umgebungsluft durch die geöffnete Tür im oberen Bereich bzw. durch den Türspalt in den Spülraum nachströmt. Durch die Konvektionsströmung verbessert sich der Wärmetausch zwischen Spülraum und Wärmetauscher und es wird erreicht, dass die Temperatur im Spülraum nicht zu stark, insbesondere nicht wesentlich unter die Umgebungstemperatur absinkt.

Gemäß einem zweiten Ausführungsbeispiel weist die Wärmerückgewinnungseinrichtung einen Luftzuführungskanal auf, um Luft zum Wärmespeicher hinzuführen, sowie einen Luftabführungskanal, um Luft vom Wärmespeicher wegzuführen, wobei der Luftzuführungskanal und der Luftabführungskanal jeweils anderendseitig in den Spülraum einmünden. Luftzuführungskanal und Luftabführungskanal bilden somit einen Umluftkreislauf, um Luft aus dem Spülraum zum Wärmespeicher und wieder zurück zum Spülraum zu führen. Dabei kann der Wärmespeicher an den Luftzuführungskanal und an den Luftabführungskanal jeweils strömungstechnisch angeschlossen sein.

Gemäß einer ersten Alternative kann dabei vorgesehen sein, dass die im Umluftkreislauf geführte Luft mit dem Wärmespeicher lediglich in thermischen Kontakt kommt, also mit dem Wärmespeichermedium selbst nicht in unmittelbaren Kontakt gelangt. Die Luft kann dabei beispielsweise an einer Wärmespeicherwand entlanggeführt oder mittels Rohre durch den Wärmespeicher hindurchgeführt werden. Gemäß einer vorteilhaften zweiten Alternative kann der Umluftkreislauf aber auch so ausgebildet sein, dass die Luft im Betrieb über den Luftzuführungskanal aus dem Spülraum heraus in den Wärmespeicher gefördert werden kann. Dabei gelangt die Luft insbesondere in unmittelbaren Kontakt mit dem Wärmespeichermedium, d.h. dem im Wärmespeicher bevorrateten flüssigen oder teilweise gefrorenen bzw. eisförmigen Wasser; sie strömt also unmittelbar an der Wasser- und/oder Eisoberfläche entlang. Der Luftabführungskanal dient indes dazu, aus dem Wärmespeicher stammende Luft zurück in Spülraum zu fördern. Im Ergebnis ist so ein Umluftkreislauf geschaffen, der im Betriebsfall eine Luftumwälzung gestattet, und zwar aus dem Spülraum heraus, durch den Luftzuführungskanal in den Wärmespeicher und von dort aus durch den Luftabführungskanal zurück in den Spülraum. Die Luftführungskanäle ermöglichen eine Wärmeenergieübertragung von der im Spülbehälter befindlichen Luft auf das im Wärmespeicher der Wärmepumpeneinrichtung befindliche Wasser. Im Betriebsfall kann damit Wärmeenergie aus der vom Spülbehälter beherbergten Luft auf das im Wärmespeicher befindliche Wasser übertragen werden.

Die vorbeschriebene Konstruktion erweist sich insbesondere insofern als vorteilhaft, als dass mit Beginn einer Spülguttrocknung Trocknungsluft in dem Umluftkreislauf durch den Spülbehälter und den Wärmespeicher geführt werden kann. Dabei kann die in der Trocknungsluft befindliche Wärmeenergie dazu genutzt werden, das Wasser im Wärmespeicher der Wärmepumpeneinrichtung zu erwärmen beziehungsweise dort befindliches Eis aufzutauen, so dass ein baldiger Wiedereinsatz der Wärmepumpeneinrichtung gestattet ist. Somit kann die zwecks Aufheizung der Spülflotte in die Spülflotte eingebrachte Wärmeenergie teilweise zurückgewonnen werden und geht nicht durch Abpumpen der Spülflotte verloren. Damit kann ein Teil der zuvor durch die Wärmepumpeneinrichtung in die Spülflotte eingebrachten Wärmeenergie für die Wärmepumpeneinrichtung zwecks Erwärmung des im Wärmespeicher bevorrateten Wassers zurückgewonnen werden. Dabei erfolgt die Übertragung der in der Trocknungsluft befindlichen Wärmeenergie auf das im Wärmespeicher bevorratete Wasser bzw. Eis vorzugsweise direkt, d.h. ohne dazwischenliegende Wand. Die Wärmeübertragung erfolgt insbesondere durch Vorbeiströmen der Luft an der Wasseroberfläche bzw. Eisfläche und steht somit in direktem Wirkkontakt mit ihr. Anders ausgedrückt ist die durch den Inhalt des Wärmespeichers gebildete Oberfläche, die als mindestens eine Wärmeübertragungsfläche dient, durch die in den Wärmespeicher eintretende Luft anströmbar ausgebildet ist, so dass Luftfeuchtigkeit an ihr unmittelbar kondensiert werden kann, das heißt in der Trocknungsluft befindliche Feuchtigkeit fällt in Form von Wasser aus, welches sich im Wärmespeicher ansammelt. Die insofern abgekühlte und entfeuchtete Trocknungsluft wird in den Spülraum zurückgeführt, wofür der Luftabführungskanal dient. Im Umwälzbetrieb wird die Trocknungsluft weiter umgeführt, zumindest solange, bis die Trocknungsluft soweit abgekühlt ist, dass kein weiterer zumindest nennenswerter Wärmeübergang von der Trocknungsluft auf das im Wärmespeicher befindliche Wasser stattfindet. Diese Ausgestaltung der Wärmerückgewinnungseinrichtung erbringt mithin nicht nur eine besonders schnelle Aufheizung des im Wärmespeicher der Wärmepumpeneinrichtung bevorrateten Wassers. Es wird auch eine schnellere Spülguttrocknung dadurch erreicht, dass es infolge der Abkühlung der Trocknungsluft zu Kondensationseffekten kommt, und zwar im Wärmespeicher der Wärmepumpeneinrichtung, womit das Wasser dem Spülbehälter entzogen ist, so dass die Spülguttrocknung beschleunigt vonstattengeht.

Vorzugsweise ist eine Ventilatoreinheit vorgesehen, die in den Luftzuführungskanal und/oder den Luftabführungskanal integriert oder im Wärmespeicher, etwa im Deckenbereich des Wärmespeichers angeordnet ist. Dabei dient die Ventilatoreinheit dazu, im Betriebsfall in schon vorbeschriebener Weise Trocknungsluft im Umwälzbetrieb aus dem Spülbehälter in den Wärmespeicher und wieder zurück in den Spülbehälter zu fördern. Es kann zu diesem Zweck eine in den Luftzuführungskanal integrierte Ventilatoreinheit vorgesehen sein, die Trocknungsluft aus dem Spülbehälter ansaugt und diese alsdann durch den Wärmespeicher hindurch zurück in den Spülbehälter drückt. Alternativ oder in Ergänzung hierzu kann eine Ventilatoreinheit vorgesehen sein, die in den Luftabführungskanal integriert ist.

Des Weiteren ist vorgesehen, dass der Luftzuführungskanal in Höhenrichtung der Geschirrspülmaschine oberhalb der Einmündungsstelle des Luftabführungskanals in den Spülraum einmündet. Dadurch ist sichergestellt, dass der Lufteintritt aus dem Spülraum in den Luftzuführungskanal oberhalb der Lufteinführstelle aus dem Luftabführungskanal in den Spülraum liegt. Damit ist gleichzeitig sichergestellt, dass es zu keiner nennenswerten Luftdurchmischung innerhalb des Spülraums von noch warmer im Spülbehälter befindlicher Trocknungsluft einerseits und über den Luftabführungskanal in den Spülraum zugeführter kälterer Trocknungsluft andererseits kommt. Ferner stellt diese Anordnung sicher, dass noch möglichst warme Trocknungsluft dem Spülraum entnommen und dem Wärmespeicher über den Luftzuführungskanal zugeführt wird.

Es ist ferner bevorzugt, dass der Luftzuführungskanal möglichst nahe der Decke des Spülbehälters in den Spülraum einmündet. Dabei meint "möglichst nahe" im Sinne der Erfindung, dass der Lufteintritt in den Luftzuführungskanal in Höhenrichtung des Geschirrspülbehälters soweit nach oben wie möglich gelegt ist, mithin möglichst nahe zur Deckenwandung des Spülbehälters. Damit wird der positive Effekt unterstützt, im Betriebsfall möglichst warme Trocknungsluft über den Luftzuführungskanal in den Wärmespeicher einführen zu können.

Es ist vorzugsweise vorgesehen, dass der Luftzuführungskanal und/oder der Luftabführungskanal mit einer Verschlusseinrichtung ausgerüstet sind. Dabei gestattet es eine Verschlusseinrichtung, den jeweiligen Kanal vorzugsweise fluiddicht zu verschließen. Damit kann im Nichtbetriebsfall der Ventilatoreinheit sichergestellt werden, dass ein ungewollter Umluftbetrieb unterbleibt, mithin ein Umluftbetrieb nur während einer bestimmungsgemäßen Spülguttrocknung stattfinden kann, da ansonsten die Luftführungskanäle verschlossen ausgebildet sind. Ferner sorgen die Verschlusseinrichtungen im Verschlussfall dafür, dass aus dem offen ausgebildeten Wärmespeicher der Wärmepumpeneinrichtung nicht ungewollt Wasser in die Luftführungskanäle und von dort aus gegebenenfalls in den Spülraum gelangen kann.

Gemäß einem weiteren Merkmal ist vorgesehen, dass eine Verschlusseinrichtung ein Verschlussmittel einerseits sowie ein damit zusammenwirkendes Stellglied andererseits aufweist. Dabei ist das Verschlussmittel mittels des Stellglieds aus einer Gebrauchsstellung in eine Nicht-Gebrauchsstellung und umgekehrt überführbar. Bevorzugterweise kann es sich bei dem Verschlussmittel um eine Klappe handeln, die in Gebrauchsstellung den zugehörigen Luftführungskanal fluiddicht absperrt. In der Nicht-Gebrauchsstellung ist die als Stellglied dienende Klappe verschwenkt, womit der vom jeweiligen Kanal bereitgestellte Durchströmungsquerschnitt zumindest teilweise geöffnet ausgebildet ist.

Gemäß einem weiteren Merkmal ist vorgesehen, dass das Stellglied an eine Steuereinheit kommunikationstechnisch angeschlossen ist. Bei der Steuereinheit kann es sich um die von der Geschirrspülmaschine ohnehin bereitgestellte Steuereinheit handeln. Mittels dieser wird die Stellung der Verschlussmittel gesteuert, vorzugsweise spülprogrammabhängig.

Auch bei diesem Ausführungsbeispiel der Wärmerückgewinnungseinrichtung kann vorgesehen sein, dass der Wärmespeicher zur Überführung von Wasser in den Spülbehälter an den Spülraum strömungstechnisch angeschlossen ist.

Im bestimmungsgemäßen Betriebsfall kondensiert in der Trocknungsluft befindliche Feuchtigkeit aus, insbesondere direkt an der Oberfläche des Wassers und/oder Eises, und sammelt sich im Wärmespeicher der Wärmepumpeneinrichtung an. Mit der Zeit steigt also die bevorratete Wassermasse innerhalb des Wärmespeichers. Um zu vermeiden, dass es zu ungewollten und/oder unkontrollierten Wasserausträgen aus dem Wärmespeicher kommt, ist eine Leitung zur strömungstechnischen Anbindung des Wärmespeichers an den Spülbehälter vorgesehen. Im Bedarfsfall kann über diese Leitung überschüssiges Wasser aus dem Wärmespeicher entfernt und in den Spülbehälter eingefördert werden. Dies kann entweder zu Beginn eines Spülprogramms erfolgen, so dass eine anschließende Nutzung des aus dem Wärmespeicher stammenden Wassers während der Durchführung des Spülprogramms erfolgen kann. Alternativ kann am Ende eines Spülprogramms überschüssiges Wasser aus dem Wärmespeicher entfernt und in den Spülbehälter überführt werden, so dass dann von dort aus durch Abpumpen ein Verwerfen stattfinden kann.

Vorzugsweise wird der Betrieb der Wärmerückgewinnungseinrichtung, in diesem Fall insbesondere der Umluftbetrieb, also die Führung der Trocknungsluft im Umluftkreislauf durch den Spülbehälter und den Wärmespeicher, während des Programmabschnitts TROCKNEN begonnen und über den Abschluss des Programmabschnitts TROCKNEN und damit des Spülprogramms hinaus weitergeführt. Die Weiterführung des Umluftbetriebs ist deshalb von Vorteil, weil ein Spülprogramm regelmäßig bereits dann bestimmungsgemäß zu einem Abschluss gebracht werden kann, wenn das sich im Spülraum befindliche Spülgut noch warm ist, zumindest wärmer als die die Geschirrspülmaschine umgebende Raumluft. Diese im System befindliche Restwärme würde ungenutzt bleiben, wenn mit Ende eines Spülprogramms auch der Betrieb der Wärmerückgewinnungseinrichtung, also der Umluftbetrieb gestoppt würde. Es ist deshalb vorgesehen, dass der Umwälzbetrieb der Trocknungsluft auch über das Ende eines Spülprogramms hinaus aufrecht erhalten bleibt, um so auch noch die am Ende eines Spülprogramms im Spülgut befindliche Restwärme rückgewinnen zu können.

Wie bereits für den allgemeinen Fall beschrieben ist die Wärmerückgewinnungseinrichtung, hier die Führung der Trocknungsluft im Umluftkreislauf durch den Spülbehälter und den Wärmespeicher, im Anschluss an den Abschluss des Programmabschnitts TROCKNEN und damit des Spülprogramms zunächst für eine vorgegebene Zeitdauer in Betrieb, ohne dass eine automatische Türöffnung erfolgt. Erst zu einem späteren Zeitpunkt, insbesondere nach Ablauf der vorgegebenen Zeitdauer und/oder temperaturgesteuert, erfolgt die automatische Türöffnung, um die Temperaturabsenkung im Spülraum zu begrenzen und um für die Zuführung von Wärmeenergie in den Wärmespeicher mittels des im Umluftkreislauf geführten Luftstroms ein größeres Wärmereservoir bereitzustellen. Auch nach der Türöffnung bleibt die Wärmerückgewinnungseinrichtung vorzugsweise in Betrieb.

Zum Betrieb des Umluftkreislaufs kann die Ventilatoreinheit, angesteuert durch die Steuereinheit, mit verschiedenen Gebläsedrehzahlen betrieben werden. Dabei kann insbesondere vorgesehen sein die Ventilatoreinheit nach Abschluss des Spülprogramms und vor der automatischen Türöffnung mit einer ersten Drehzahl und nach der automatischen Türöffnung mit einer zweiten, von der ersten Drehzahl verschiedenen, vorzugsweise niedrigeren Drehzahl zu betreiben. Hierdurch kann ein hinreichend leiser Betrieb gewährleistet und die Wärmerückgewinnungseinrichtung effizient betrieben werden.

Insgesamt wird mit der erfindungsgemäßen Ausgestaltung sowohl vorrichtungsseitig als auch verfahrensseitig eine deutlich verkürzte Regenerationszeit hinsichtlich des von der Wärmepumpeneinrichtung als Wärmereservoir dienenden Wärmespeichermediums erreicht. Damit ist die Geschirrspülmaschine nach erfolgter Nutzung der Wärmepumpeneinrichtung schneller wieder einsetzbar, was verwenderseitig als vorteilhaft angesehen wird.

Weitere Merkmale und Vorteile der Erfindung ergeben sich aus der nachfolgenden Beschreibung anhand der Figuren. Dabei zeigen
- Fig. 1: jeweils in schematischer Darstellung die erfindungsgemäße Geschirrspülmaschine;
- Fig. 2: in schematischer Darstellung eine Geschirrspülmaschine mit einer Wärmerückgewinnungseinrichtung gemäß einem ersten Ausführungsbeispiel;
- Fig. 3: in schematischer Darstellung eine Geschirrspülmaschine mit einer Wärmerückgewinnungseinrichtung gemäß einem zweiten Ausführungsbeispiel;
- Fig. 4: in schematischer Darstellung eine Geschirrspülmaschine mit einer Wärmerückgewinnungseinrichtung gemäß einem weiteren Ausführungsbeispiel;
- Fig. 5: in schematischer Darstellung eine Geschirrspülmaschine mit einer Wärmerückgewinnungseinrichtung gemäß einem weiteren Ausführungsbeispiel.Fig. 1 lässt in schematischer Darstellung den prinzipiellen Aufbau einer Geschirrspülmaschine 1 mit einer Wärmepumpeneinrichtung 18 erkennen, wie er auch den erfindungsgemäßen Ausführungsformen gemäß der Figuren 2 bis 5 zugrunde liegt.

Die Geschirrspülmaschine 1 verfügt über ein in den Figuren nicht näher dargestelltes Gehäuse, das unter anderem einen Spülbehälter 2 aufnimmt. Der Spülbehälter 2 stellt seinerseits einen Spülraum 3 bereit, der im bestimmungsgemäßen Verwendungsfall der Aufnahme von zu reinigendem Spülgut dient, der sog. Beladung.

Zur Beschickung von zu reinigendem Spülgut mit Spülflotte dient eine Sprüheinrichtung 4, die innerhalb des Spülbehälters 2 angeordnet ist. Bevorzugterweise verfügt eine solche Sprüheinrichtung 4 über Sprüharme 5, die jeweils verdrehbar innerhalb des Spülbehälters 2 angeordnet sind.

Der Spülraum 3 mündet in einen im Detail nicht näher dargestellten Sammeltopf 6 des Spülbehälters 2 ein, an den eine Umwälzpumpe 7 strömungstechnisch angeschlossen ist. Über entsprechende Versorgungsleitungen 9 sind die Sprüharme 5 der Sprüheinrichtung 4 an die Umwälzpumpe 7 strömungstechnisch angeschlossen, und zwar unter Zwischenschaltung einer Wasserweiche 8. Im bestimmungsgemäßen Verwendungsfall kann damit eine Beschickung der Sprüheinrichtung 4 mit Spülflotte mittels der Umwälzpumpe 7 stattfinden, wobei Dank der Wasserweiche 8 eine Beschickung der Sprüharme 5 wahlweise stattfinden kann.

Die Geschirrspülmaschine 1 verfügt des Weiteren über einen Ablauf 12, über den gebrauchte und nicht mehr benötigte Spülflotte verworfen wird. Es ist zu diesem Zweck eine strömungstechnisch an den Sammeltopf 6 angeschlossene Ablaufleitung 10 vorgesehen, in die eine Ablaufpumpe 11 integriert ist. Sich im Sammeltopf 6 ansammelnde Spülflotte kann bei eingeschalteter Pumpe 11 über die Ablaufleitung 10 abgepumpt und damit verworfen werden.

Zwecks Zuführung von Frischwasser ist ein Frischwasseranschluss 13 vorgesehen. Dieser verfügt über eine an den Sammeltopf 6 strömungstechnisch angeschlossene Frischwasserleitung 14, in die ein Flügelradzähler 15 und ein Enthärter 16 integriert ist. Entsprechende Ventile 17 ermöglichen ein fluiddichtes Verschließen der Frischwasserleitung 14.

Die Geschirrspülmaschine 1 verfügt des Weiteren über eine Wärmepumpeneinrichtung 18. Diese weist einen Verdichter 21, einen Verflüssiger 19, ein Expansionsorgan 23, einen Verdampfer 22 sowie einen diese Baukomponenten strömungstechnisch miteinander verbindenden Strömungskreislauf 30 auf, in dem ein Arbeitsmedium geführt ist.

Der Verdampfer 22 ist innerhalb eines Wärmespeichers 24 angeordnet, der mit Wasser 25 als Wärmeträgermedium befüllt ist.

Im bestimmungsgemäßen Verwendungsfall der Wärmepumpeneinrichtung 18 findet mit Hilfe des Verflüssigers 19 ein Wärmeübertrag von dem in Strömungskreislauf 30 der Wärmepumpeneinrichtung 18 geführten Arbeitsmedium auf die Spülflotte statt. Zu diesem Zweck ist ein an die Umwälzpumpe 7 strömungstechnisch angeschlossener Strömungskreislauf 20 für Spülflotte vorgesehen. Die im Betriebsfall im Verflüssiger 19 durch Verflüssigung des Arbeitsmediums freiwerdende Wärmeenergie wird mithin auf die im Strömungskreislauf 20 umgewälzte Spülflotte übertragen.

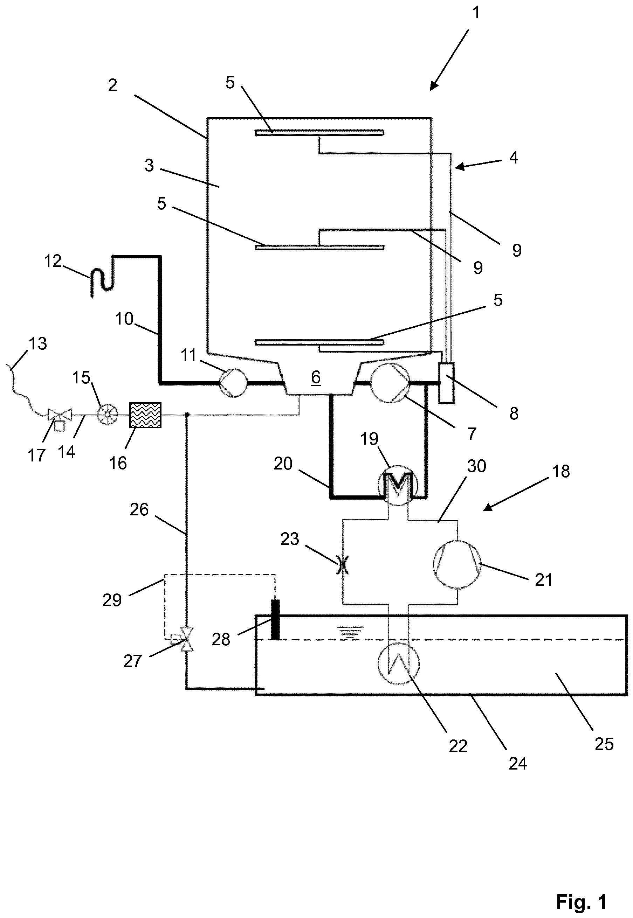

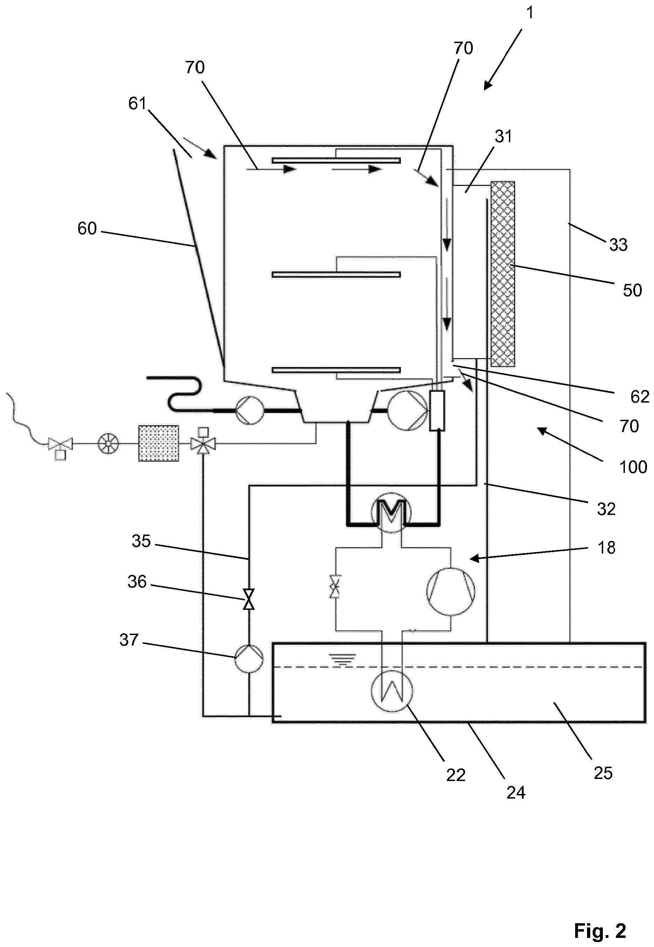

Gemäß der gezeigten Ausführungsform ist der Wärmespeichers 24 als offener Wassertank ausgebildet und über eine Leitung 26 an die Frischwasserleitung 14 strömungstechnisch angeschlossen, was es im Bedarfsfall gestattet, den Wärmespeichers 24 mit Frischwasser zu befüllen. Zur Einstellung eines vorgebbaren Wasserpegels innerhalb des Wärmespeichers 24 ist ein Füllstandssensor 28 vorgesehen, der in kommunikationstechnischer Verbindung 29 mit einem in die Leitung 26 integrierten Ventil 27 steht. Der Wärmespeicher 24 kann über eine Überlauf- oder Entlüftungsleitung 33, wie zwar nicht in Fig. 1 aber in Fig. 2 gezeigt, mit dem Spülraum 3 verbunden sein.

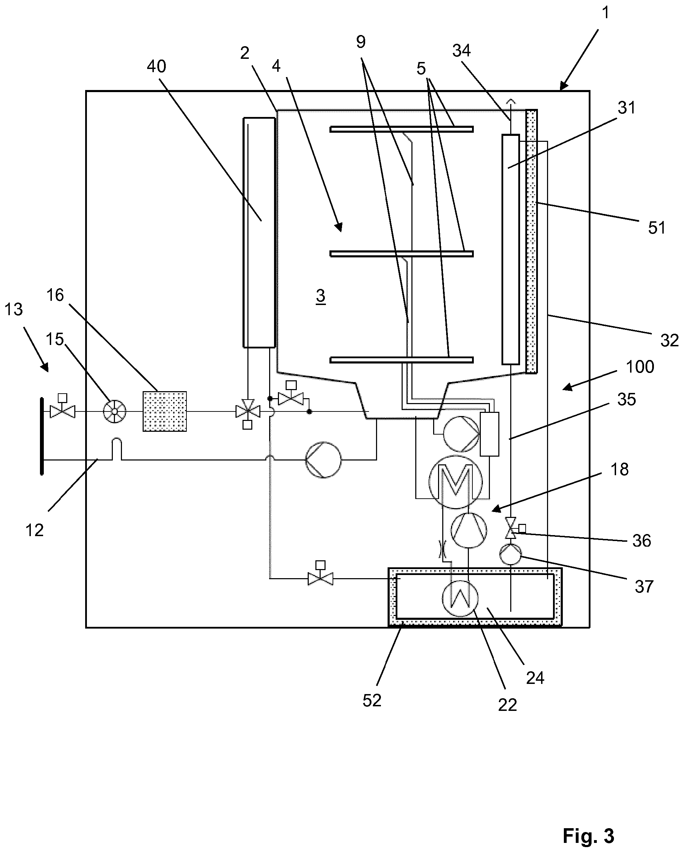

Die Geschirrspülmaschine 1 weist darüber hinaus eine Wärmerückgewinnungseinrichtung 100 auf, mittels der Wärme aus dem Spülraum 3 dem Wärmespeicher 24 zuführbar ist. Diese ist in Fig. 1 zur besseren Übersichtlichkeit weggelassen. Mögliche Ausführungsformen der Wärmerückgewinnungseinrichtung sind in den Figuren 2 und 3 dargestellt.

Gemäß einem ersten Ausführungsbeispiel verfügt die Wärmerückgewinnungseinrichtung 100 der erfindungsgemäßen Geschirrspülmaschine 1 in Entsprechung der Fig. 2 über einen dem Spülbehälter 2 nebengeordneten Wärmetauscher 31, der in strömungstechnischer Verbindung mit dem Wärmespeicher 24 der Wärmepumpeneinrichtung 18 steht. Demgemäß verfügt die erfindungsgemäße Geschirrspülmaschine 1 mithin über zwei Wasserbehältnisse, nämlich über den Wärmespeicher 24 einerseits sowie den Wärmetauscher 31 andererseits. Beide Behältnisse sind voneinander separiert ausgebildet, wobei sich der Wärmespeicher 24 vorzugsweise im Sockelbereich der Geschirrspülmaschine 1 unterhalb des Spülbehälters 2 befindet, wohingegen der Wärmetauscher 31 dem Spülbehälter 2 nebengeordnet ist und bevorzugterweise außenseitig einer seitlichen Wandung des Spülbehälters 2 angeordnet ist. Dabei ist der Wärmetauscher 31 mit dem Spülbehälter 2 vorzugsweise thermisch gekoppelt, wobei der Wärmespeicher 24 vom Spülbehälter 2 vorzugsweise thermisch entkoppelt ist. Zwecks strömungstechnischer Verbindung von Wärmespeicher 24 und Wärmetauscher 31 verfügt die Wärmerückgewinnungseinrichtung 100 über Verschlauchungen und/oder Verleitungen 35, typischerweise wie hier gezeigt ohne strömungstechnische Zwischenschaltung des Spülbehälters 2 (optional aber auch mit strömungstechnischer Zwischenschaltung des Spülbehälters 2).

Gemäß der Ausführungsform nach Fig. 2 ist der Wärmetauscher 31 mittels der Leitung 35 strömungstechnisch an den Wärmespeicher 24 angeschlossen. In die Leitung 35 ist ferner ein Ventil 36 und eine Pumpe 37 integriert, so dass ein gepumptes Abführen von Wasser 25 aus dem Wärmespeicher 24 in den Wärmetauscher 31 gestattet ist. Des Weiteren ist eine Überlaufleitung 32 vorgesehen, die einen Überlauf von Wasser aus dem Wärmetauscher 31 in den Wärmespeicher 24 gestattet.

Der Wärmetauscher 31 kann wie hier gezeigt auf seiner dem Spülbehälter 2 abgewandten Seite, also auf seiner dem Gehäuse der Geschirrspülmaschine 1 zugewandten Seite, mit einer Dämmschicht 50 versehen sein, wodurch eine etwaige außenseitige Betauung verhindert wird.

Die Ausführungsform nach Fig. 3 unterscheidet sich nur geringfügig von der vorbeschriebenen Ausführungsform nach Fig. 2. Der wesentliche Unterschied bei Ausführungsform nach Fig. 3 besteht darin, dass der Wärmetauscher 31 nicht dem Spülbehälter 2 nebengeordnet, sondern innerhalb des Spülbehälters 2 angeordnet ist. Dabei kann der Wärmetauscher 31 sich beispielsweise innenseitig entlang einer Seitenwand des Spülbehälters 2 erstrecken. Auf diese Weise kann eine Kondensatbildung außenseitig des Spülbehälters 2 vermieden und ein besonders guter Wärmeaustausch ermöglicht werden. Zusätzlich weist die Außenseite des Spülbehälters 2 eine, insbesondere im Bereich des Wärmetauschers 31 verstärkte, Wärmedämmung 51 auf. Auch bei der Ausführungsform nach Fig. 3 ist der Wärmetauscher 31 mittels der Leitung 35 strömungstechnisch an den Wärmespeicher 24 angeschlossen, in welcher Leitung 35 ein Ventil 36 und eine Pumpe 37 integriert ist, so dass ein gepumptes Abführen von Wasser 25 aus dem Wärmespeicher 24 in den Wärmetauscher 31 gestattet ist. Des Weiteren ist eine Überlaufleitung 32 vorgesehen, die einen Überlauf von Wasser aus dem Wärmetauscher 31 in den Wärmespeicher 24 gestattet. Der Wärmetauscher 31 weist im Übrigen eine Entlüftung 34 auf. In Fig. 3 ist darüber hinaus eine Wärmedämmung 52 des Wärmespeichers 24 dargestellt. Eine solche kann vorzugsweise auch bei der Ausführungsform nach Fig. 2 vorhanden sein.

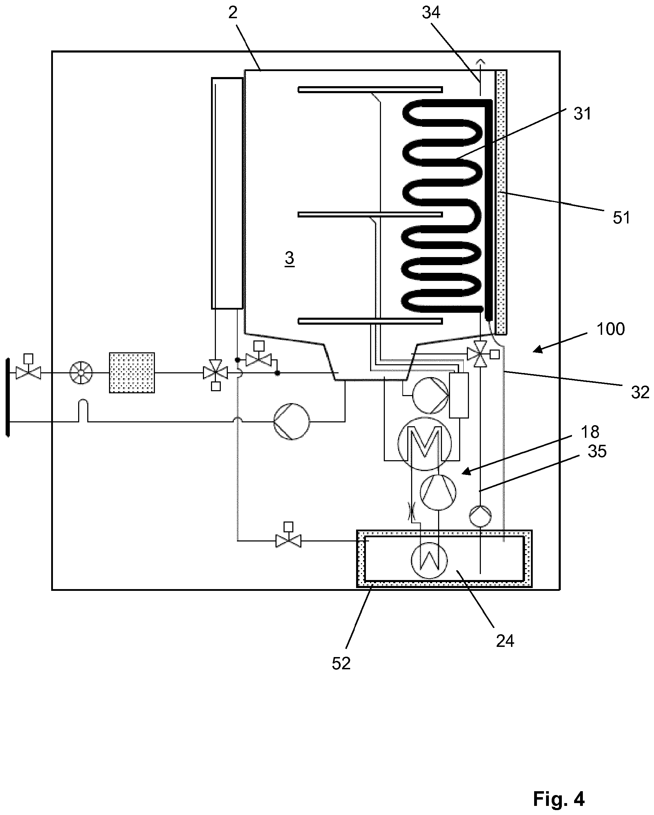

Die Ausführungsform nach Fig. 4 unterscheidet sich lediglich dadurch von der nach Fig. 3, dass der Wärmespeicher 31 hierbei zwar ebenfalls innerhalb des Spülbehälters 2 angeordnet ist, jedoch nicht als Tank ausgebildet ist, sondern als, beispielsweise mäanderförmiges Rohr ausgebildet ist. Ein solches kann einerseits einen besonders guten Wärmeaustausch ermöglichen und andererseits optimal an den vorhandenen Konturen im Spülraum 3 angepasst werden und dadurch den Raum besonders effektiv nutzen.

Die Ausführungsbeispiele gemäß den Figuren 3 und 4 zeigen darüber hinaus im Bereich des Wassereinlaufs eine, an einer Seitenwand des Spülbehälters 2 angeordnete Wassereinlauftasche 40. In dieser kann in an sich bekannter Weise für den Einlauf in den Spülbehälter 2 vorgesehenes Frischwasser bevorratet werden, so dass dessen Temperatur bei Einlauf in den Spülbehälter 2 bereits um einige Grad auf Umgebungstemperaturniveau erhöht ist. Eine derartige Wassereinlauftasche 40 kann entsprechend auch bei der Ausführungsform nach Fig. 2 eingesetzt werden.

Das erfindungsgemäße Verfahren zur Wärmerückgewinnung geht bezüglich der vorbeschriebenen Konstruktionen von Figur 2 bis 4 wie folgt vonstatten:
Bevorzugterweise kurz vor Ende eines Programmschrittes Reinigen und/oder Zwischenspülen und/oder Klarspülen wird das nicht eingefrorene Eiswasser 25 aus dem Wärmespeicher 24 in den separaten Wärmetauscher 31 gepumpt. Das Eiswasser wird in diesem Fall durch die Restwärme im Spülraum 3, das heißt insbesondere der Beladung und der Spülflotte erwärmt.

Die Spülflotte wird durch die Sprüharme 5 unter anderem auf die Spülraumwände innenseitig (bzw. gemäß Fig 3 oder 4 direkt auf den innenliegenden Wärmetauscher 31) gesprüht. Während des Ablaufens in den Sammeltopf 6 wird die Spülflotte durch das Eiswasser im seitlichen (Fig. 2), bzw. innenliegenden (Fig. 3 oder 4) Wärmetauscher 31 abgekühlt. Durch den hohen Temperaturgradienten erfolgt ein Wärmeaustausch mit hoher Geschwindigkeit. Da das Spülprogramm weiterläuft, wird die abgekühlte Spülflotte durch die Beladung wieder erwärmt.

Nach einer gewissen Zeit, beispielsweise, wenn im Wärmetauscher 31 eine in der Geräteelektronik hinterlegte Temperatur von zum Beispiel 10°C bis 20°C erreicht und/oder eine in der Geräteelektronik hinterlegte Temperatur im Sammeltopf 6 oder eine in der Geräteelektronik hinterlegte Temperaturdifferenz zwischen der Temperatur im Sammeltopf 6 und der Temperatur im Wärmetauscher 31 unterschritten und/oder eine in der Geräteelektronik fest hinterlegte Zeitrampe überschritten wird, wird das Ventil 36 geöffnet der Wärmetauscher 31 in den Wärmespeicher 24 entleert. Dies erfolgt vorzugsweise schwerkraftgetrieben.

Anschließend wird wiederum Wasser 25 aus dem Wärmespeicher 24 in den separaten Wärmetauscher 31 gepumpt. Dieser Füll- und Entleerungsvorgang oder auch Regenerationszyklus wird für eine Vielzahl von Zyklen wiederholt. Das im Wärmetauscher 31 erwärmte Wasser taut das Eis im Wärmespeicher 24 dabei sukzessive ganz oder teilweise auf, abhängig von der Zykluszahl, der Eismenge im Wärmespeicher 24 und der Beladung, das heißt der zur Verfügung gestellten Wärmekapazität.

Dabei kann eine feste Anzahl an Regenerationszyklen in der Gerätesteuerung hinterlegt sein. Diese Anzahl kann beispielsweise in Abhängigkeit von der Spülraumtemperatur bei Programmstart variiert werden. Die Anzahl an Regenerationszyklen, d.h. das Beenden des Betriebs der Wärmerückgewinnungseinrichtung, kann auch abhängig von sensierten Steuerungsgrößen, etwa der Temperatur im Wärmespeicher 31 festgelegt werden.

Der Regenerationsschritt, also der Betrieb der Wärmerückgewinnungseinrichtung 100, kann wahlweise nach jedem Programmschritt, insbesondere nach jedem Programmaschritt mit zu erwärmender Spülflotte, durchgeführt werden. Besonders sinnvoll ist dieser Betrieb der Wärmerückgewinnungseinrichtung 100 jedoch vor allem zum Programmende, insbesondere unmittelbar vor und/oder während des Trocknungsschrittes. Die Wärmerückgewinnung wird dabei während der Trocknung auch nach dem Abpumpen der Spülflotte fortgesetzt.

Um jedoch die Wärmerückgewinnung noch weiter zu beschleunigen, wird die Wärmerückgewinnungseinrichtung 100 auch über das Spülprogrammende hinaus, also nach Abschluss des Trocknungsabschnitts und damit nach Abschluss des Spülprogramms weiter betrieben. Dabei ist die Türsteuerungsvorrichtung erfindungsgemäß dazu eingerichtet, die Tür 60 der Geschirrspülmaschine 1 zur Erwärmung der Temperatur im Spülraum 3 nach Abschluss des Spülprogramms automatisch zumindest spaltweise zu öffnen.

Bei einer solchen Verlängerung der Verfahrensdurchführung wird das Eiswasser direkt über die Spülraumseitenwand durch die Umgebung, d.h. die in den Spülraum 3 von außen einströmende Umgebungsluft, erwärmt. Dabei kann vergleichsweise warme Umgebungsluft in den Spülraum 3 aufgrund der automatisch geöffneten Spülraumtür 60 nachströmen. Besonders vorteilhaft bei dieser Methode ist, dass bei einer verlängerten Wärmerückgewinnung über die Umgebung das Verfahren auch ohne Beladung, das heißt ohne sich im Spülbehälter 2 befindliches Spülgut, d.h. nach dem Ausräumen des gespülten und getrockneten Spülgutes, möglich ist.

Nach Abschluss des Spülprogramms entzieht die Wärmerückgewinnungseinrichtung 100 zunächst dem Spülraum 3 die darin gespeicherte Restwärme aus dem Spülprogramm. Dabei bleibt die Geschirrspülertür 60 vorzugsweise während einer ersten Phase geschlossen. Die Dauer dieser ersten Phase beträgt zwischen 0,25 und 3 Stunden und wird vorzugsweise abhängig des gewählten Spülprogramms festgelegt. Sie dauert im Fall eines ECO-Programms 0,5 bis 1,5 Stunden, beispielsweise eine Stunde, im Fall eines Hochtemperaturprogramms 1 bis 3 Stunden, beispielsweise 2 Stunden. Nach Ablauf dieser ersten Phase ist die Temperatur im Spülraum 3 stark gesunken, insbesondere unter die Umgebungstemperatur, d.h. die Temperatur im Aufstellungsraum der Geschirrspülmaschine 1, und die Geschirrspülertür 60 wird, veranlasst durch die Türsteuerungsvorrichtung, spaltweise geöffnet. Die Türöffnung dient somit zur Erwärmung der Temperatur im Spülraum 3. Der durch den oberen Türspalt 61 eindringende Luftstrom 70 trifft im oberen Bereich des Spülbehälters 2 auf die Spülraumwand des Spülbehälters 2, an der außenseitig der Wärmetauscher 31 in thermisch gekoppelter Weise angeordnet ist (gem. Fig. 2), oder trifft unmittelbar auf den im Spülbehälter 2 angeordneten Wärmetauscher 31 (gem. Fig. 3 oder 4). Die dabei sich abkühlende, gleichzeitig das Wasser im Wärmetauscher 31 erwärmende Luft 70 sinkt herab und kann etwa aus einer im unteren Bereich des Spülbehälter 2 angeordneten Entlüftungsöffnung 62 oder aus dem seitlichen Spalt der Tür 60 im unteren Bereich aus der Spülbehälter 2 austreten, gleichzeitig strömt wärmere Luft 70 durch den oberen Türspalt 61 nach.

Es kann auch eine Verfahrensführung vorgesehen sein, bei der in an sich bekanntere Weise eine spaltweise automatische Türöffnung zur Trocknungsunterstützung bereits im Spülprogramm, nämlich im Programmschnitt TROCKNEN, vorgesehen ist. In diesem Fall ist die Türsteuerungsvorrichtung vorzugsweise auch dazu eingerichtet, die geöffnete Tür 60 oder zumindest die spaltweise geöffnete Tür 60 selbsttätig zu schließen. Es sind somit Schließmittel vorhanden, mit der die Tür 60 aus ihrer insbesondere spaltweisen offenen Stellung zurück in die verschlossene Stellung verbracht werden kann. Die Tür 60 wird vorzugsweise vor oder mit Abschluss des Spülprogramms mittels der Schließmittel wieder automatisch geschlossen.

Die Dauer der ersten Phase und damit der Zeitpunkt, an dem die Tür 60 nach Abschluss des Spülprogramms automatisch geöffnet wird, kann temperaturgesteuert bestimmt, d.h. abhängig von einem Temperaturmesswert eines hier nicht gezeigten Temperatursensors eingestellt und/oder abhängig von einer Umgebungstemperatur, sein. Hierzu kann die Geschirrspülmaschine 1 einen Temperatursensor zur Erfassung einer Lufttemperatur außerhalb der Geschirrspülmaschine 1 aufweisen, beispielsweise kann dieser am Gehäuse, insbesondere an der Tür 60 der Geschirrspülmaschine angeordnet sein. Alternativ kann die Steuerungsvorrichtung der Geschirrspülmaschine 1 auch mit einem externen, also nicht zum Geschirrspüler 1 gehörenden Temperatursensor kommunikationstechnisch verbunden oder verbindbar sein. Gemäß einem weiteren Ausführungsbeispiel kann als Umgebungstemperatur auch die von einem Temperatursensor im Spülbehälter 2, insbesondere im Sammeltopf 6, am Programmstart gemessene und abgespeicherte Temperatur verwendet werden. Während des Betriebs der Wärmerückgewinnungseinrichtung 100 wird permanent oder in Intervallen ein aktueller Temperaturwert erfasst und mit dieser gespeicherten Umgebungstemperatur verglichen. Wird die gespeicherte Umgebungstemperatur um einen vorgegeben Wert unterschritten, wird die erste Phase beendet, d.h. die Tür automatisch geöffnet. Der vorgegebene Wert liegt vorzugsweise zwischen 0 und 3 K, insbesondere zwischen 0,25 und 1 K.

Nach Abschluss dieser ersten Phase wird die Wärmerückgewinnungseinrichtung 100, d.h. das abwechselnde Befüllen und Entleeren des Wärmetauschers 31, bei dann spaltweise geöffneter Tür 60 weiter betrieben.

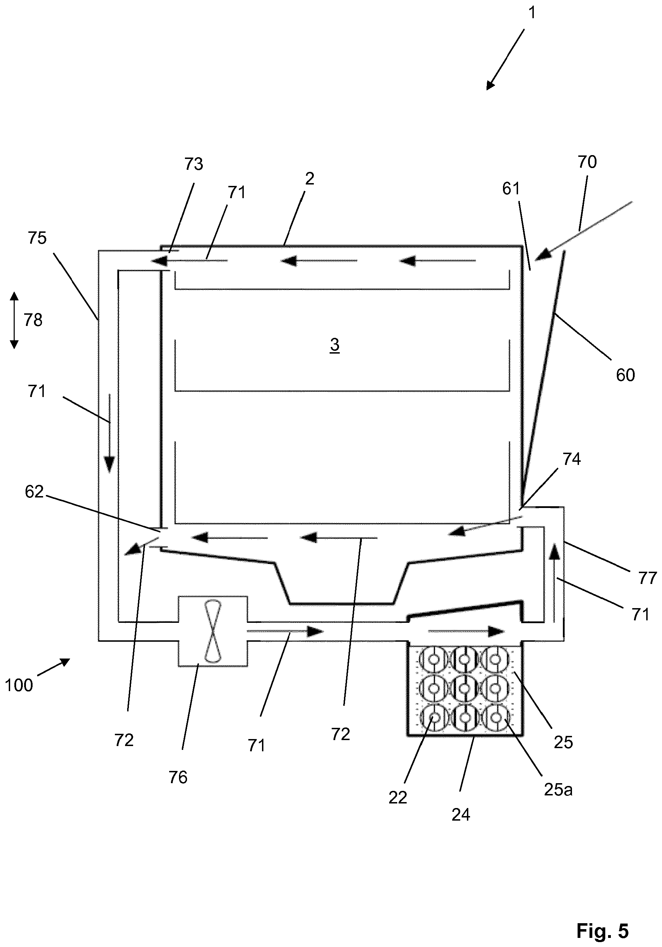

Ein weiteres Ausführungsbeispiel zur Wärmerückgewinnung ist in Fig. 5 schematisch dargestellt:
Die Geschirrspülmaschine 1 und die Wärmepumpeneinrichtung 18 kann auch hierbei wie in Fig. 1 gezeigt ausgebildet sein. Von den Komponenten der Wärmepumpeneinrichtung ist in Fig. 5 zur besseren Übersichtlichkeit lediglich der Verdampfer 22 dargestellt, welcher innerhalb des Wärmespeichers 24 angeordnet ist und hier beispielsweise in Form von mäandernd ausgebildeten Rohrabschnitten ausgebildet ist. Der Wärmespeicher 24 ist hier als Wassertank ausgebildet, als Wärmespeichermedium dient somit Wasser.

Gemäß diesem Ausführungsbeispiel verfügt die Geschirrspülmaschine 1 über eine Wärmerückgewinnungseinrichtung 100, welche einen Luftzuführungskanal 75 und einen Luftabführungskanal 77 umfasst. Der Wärmespeicher 24 ist an den Luftzuführungskanal 75 und an einen Luftabführungskanal 77 strömungstechnisch angeschlossen. Anderendseitig, das heißt wärmespeicherentferntseitig, münden der Luftführungskanal 75 mit der Lufteingangsöffnung 73 und der Luftabführungskanal 77 mit der Luftausgangsöffnung 74 jeweils in den Spülraum 3 ein. Es ist so ein Umluftkreislauf zwischen Spülraum 3 und Wärmespeicher 24 geschaffen, der es ermöglicht, Luft in einem Umwälzkreislauf zu führen, und zwar aus dem Spülraum 3 durch Lufteingangsöffnung 73 und den Luftzuführungskanal 75 hindurch in den Wärmespeicher 24 und von dort aus durch den Luftabführungskanal 77 und Luftausgangsöffnung 74 zurück in den Spülraum 3. Dieser Umwälzbetrieb ist anhand von Pfeilen 71 dargestellt.

Der Wärmespeicher 24 ist derart gestaltet, dass die durchgeleitete Luft in direktem Kontakt mit im Wärmespeicher 24 gespeicherten Wasser kommt. Er ist somit dazu eingerichtet, dass eine direkte Stoffübertragung zwischen beiden Medien ermöglicht wird.

Zur Luftumwälzung weist die Wärmerückgewinnungseinrichtung 100 vorzugsweise eine Ventilatoreinheit 76 auf, die im gezeigten Ausführungsbeispiel in den Luftzuführungskanal 75 integriert ist. Alternativ ist auch die Integration einer solchen Ventilatoreinheit 76 in den Luftabführungskanal 77 oder im oberen Bereich des Wärmespeicherdeckels denkbar.

Die Ventilatoreinheit 76 verfügt über ein motorgetriebenes Laufrad. Im Betriebsfall verdreht das Laufrad, wodurch Luft aus dem Spülraum 3 angesogen und in den schon vorbeschriebenen Umluftkreislauf auch durch den Wärmespeicher 24 geführt wird. Als Ventilatoreinheit 76 können beispielsweise Axial- oder Radialventilatoren eingesetzt werden.

Die Wärmepumpeneinrichtung 18 dient im bestimmungsgemäßen Verwendungsfall in an sich bekannter Weise dazu, die Aufheizung der Spülflotte zu bewirken, zumindest teilweise. Infolgedessen kommt es zu einer Abkühlung des im Wärmespeicher 24 befindlichen Wassers 25, bis hin zum Einfrieren desselben, so dass sich Eis 25a im Wärmespeicher 24 bildet. Eine erneute Verwendung der Wärmepumpeneinrichtung 18 ist erst dann wieder energetisch sinnvoll möglich, wenn das im Wärmespeicher 24 befindliche Eis wieder aufgetaut beziehungsweise das Wasser 25 eine Mindesttemperatur erreicht hat. Um das Auftauen beziehungsweise das Erreichen der Mindesttemperatur zu beschleunigen, dienen die erfindungsgemäßen Luftführungskanäle 75 und 77, die es ermöglichen, mit Beginn einer Spülguttrocknung Trocknungsluft in einem Umluftkreislauf durch den Spülbehälter 3 und den Wärmespeicher 24 zu führen.

Die Wärmerückgewinnungseinrichtung 100 ermöglicht, die im Trocknungsschritt warme und feuchte Luft dem Spülraum 3 zu entziehen und dem Wärmespeicher 24 zuzuführen. Hier kommt es dann zu einem Wärmeübertrag aus der warmen Trocknungsluft auf das im Wärmespeicher 24 befindliche Wärmetauschermedium, was ein Auftauen von Eis 25a beziehungsweise eine Erwärmung von Wasser 25 beschleunigt. Ein Auftauen von im Wärmespeicher 24 befindlichem Eis 25a wird in Abkehr zum Stand der Technik also nicht nur durch Wärmeentzug aus der die Geschirrspülmaschine 1 umgebenden Raumluft bewerkstelligt, es erfolgt darüber hinaus ein Wärmeübertrag aus der dem Wärmespeicher 24 zugeführten Trocknungsluft, was insbesondere ein Auftauen eines vereisten Wärmespeicher 24 erheblich beschleunigt.

Die Zufuhr von Trocknungsluft in den Wärmespeicher 24 bewirkt desweiteren den positiven Effekt, dass es zu einer beschleunigten Kondensation des in der Trocknungsluft befindlichen Wasserdampfs kommt. Im Ergebnis kann so auch eine schnellere Trocknung des Spülguts erreicht werden.

Im Ergebnis erbringt die Wärmerückgewinnungseinrichtung 100 im Wesentlichen drei Vorteile. Zum einen wird eine schnellere Spülguttrocknung erreicht. Zum anderen wird das Auftauen von im Wärmespeicher 24 befindlichem Eis beschleunigt. Nicht zuletzt findet eine Wärmerückgewinnung statt, die sich energetisch auf den Gesamtprozess positiv auswirkt.

Um sicherzustellen, dass im Betriebsfall möglichst warme Trocknungsluft aus dem Spülraum 3 angesogen wird, mündet der Luftzuführungskanal 75 in Höhenrichtung 78 der Geschirrspülmaschine 1 oberhalb der Einmündungsstelle des Luftabführungskanals 77 in den Spülraum 3 ein. Dabei ist besonders bevorzugt, dass der Luftzuführungskanal 75 möglichst nahe der Decke des Spülbehälters 3 in den Spülraum 3 einmündet.

Fig. 5 lässt einen Betriebszustand erkennen, wie er sich unmittelbar nach Beendigung eines Klarspülens, das heißt vor Beginn einer Spülguttrocknung einstellt. Aufgrund der Spülflottenaufheizung während des Klarspülens unter Verwendung der Wärmepumpeneinrichtung 18 sind die im Wärmespeicher 24 angeordneten Verdampferrohre des Verdampfers 22 zumindest teilweise vereist und mit einem Eismantel 25a umgeben.

Mit Beginn der Spülguttrocknung, wird die Ventilatoreinheit 76 eingeschaltet, was eine Umluftführung der Trocknungsluft ergibt, wie in Fig. 5 anhand der Pfeile 71 schematisch dargestellt ist.

Die Ventilatoreinheit 76, die in den gezeigten Ausführungsbeispielen auf der Eingangsseite des Wärmespeicher 24 angeordnet ist, jedoch auch auf der Ausgangsseite angeordnet sein kann, fördert abgesaugte Spülraumluft durch den Wärmespeicher 24 und damit direkt über die Oberfläche des im Wärmespeicher 24 bevorrateten Wassers 25 beziehungsweise des sich durch Vereisung gebildeten Eises 25a. Infolge dieser Luftströmung kommt es zu einem Wärmeeintrag, was zur Aufheizung des Wassers 25 beziehungsweise zu einem Auftauen des sich dort befindlichen Eises 25a führt. Der aus dem Wärmespeicher 24 austretende Luftstrom hat einen niedrigeren energetischen Zustand als der zugeführte warme Luftstrom. Im Falle von feuchter Spülraumluft wird die Luftfeuchtigkeit auf der Oberfläche im Wärmespeicher 24 kondensiert. Dies hat zur Folge, dass die absolute Luftfeuchtigkeit wärmespeichereingangsseitig höher ist als die absolute Luftfeuchtigkeit wärmespeicherausgangsseitig. Zudem erfolgt eine Abkühlung der Luft um mehrere Grad Celsius. Für den Fall, dass keine Luftfeuchtigkeit mehr im Wärmespeicher 24 kondensiert oder die Luftzustände im Gleichgewichtszustand sind, ist die Eintrittstemperatur der Luft höher als am Ausgang. Somit wird nun noch die sensible Wärme aus dem Spülraum 3 genutzt und der Spülraum 3 inklusive Beladung abgekühlt, während der Wärmespeicher 24 weiter auftaut beziehungsweise erwärmt wird.

Erfindungsgemäß läuft der Luftumwälzbetrieb, also der Betrieb der Wärmerückgewinnungseinrichtung 100 nach einem Ende des Spülprogramms weiter, so dass weiterhin vom noch warmen Spülgut bzw. Spülraum 3 aufgewärmte Luft durch den Wärmespeicher 24 geführt wird. Die Zeitdauer des Nachlaufs kann fest vorgegeben oder über Sensoren in den Luftkanälen 75, 77 oder im Wärmespeicher 24 gesteuert sein.

Für diese Wärmerückgewinnung nach Abschluss des Spülprogramms bzw. des Programmabschnitts TROCKNEN wird die Ventilatoreinheit 76 mit einer im Vergleich zur Trocknung erhöhten Gebläsedrehzahl betrieben, und zwar insbesondere so, dass der in dieser Phase im Umluftkreislauf durch den Wärmespeicher 24 geförderte Volumenstrom ein Vielfaches, vorzugsweise das 1,5 bis 3-fache des während der Trocknung geförderten Volumenstromes beträgt.

Nach Abschluss des Spülprogramms entzieht die Wärmerückgewinnungseinrichtung 100 somit zunächst dem Spülraum 3 die darin gespeicherte Restwärme aus dem Spülprogramm. Wie in vorgenannten Ausführungsbeispiel beschrieben bleibt die Geschirrspülertür 60 auch hier vorzugsweise während einer ersten Phase geschlossen. Die Dauer dieser ersten Phase beträgt zwischen 0,25 und 3 Stunden und wird vorzugsweise abhängig des gewählten Spülprogramms festgelegt. Sie dauert im Fall eines ECO-Programms 0,5 bis 1,5 Stunden, beispielsweise eine Stunde, im Fall eines Hochtemperaturprogramms 1 bis 3 Stunden, beispielsweise 2 Stunden. Nach Ablauf dieser ersten Phase ist die Temperatur im Spülraum 3 stark gesunken, insbesondere unter die Umgebungstemperatur, d.h. die Temperatur im Aufstellungsraum der Geschirrspülmaschine 1, und die Geschirrspülertür 60 wird, veranlasst durch die Türsteuerungsvorrichtung, spaltweise geöffnet. Die Türöffnung dient somit zur Erwärmung der Temperatur im Spülraum 3. Die durch den oberen Türspalt 61 eindringende Umgebungsluft 70 bildet den Hauptteil des von der auch nach Türöffnung weiterhin betriebenen Wärmerückgewinnungseinrichtung 100, insbesondere von der Ventilatoreinheit 76 angesaugten und durch die Luftkanäle 75, 77 und den Wärmespeicher 24 geführten Luftstroms 71.

Die aus dem Luftabführungskanals 77 zurück in den Spülraum 3 gelangende bzw. im unteren Bereich des Spülraums 3 befindliche Luft 72 kann etwa aus einer im unteren Bereich des Spülbehälter 2 angeordneten Entlüftungsöffnung 62 oder aus dem seitlichen Spalt der Tür 60 im unteren Bereich aus der Spülbehälter 2 austreten, gleichzeitig strömt wärmere Luft 70 durch den oberen Türspalt 61 nach.

Damit die Geschirrspülmaschine 1 nicht als störend empfunden wird, kann die Ventilatoreinheit 76, sobald nach Abschluss des Programms die automatische Türöffnung erfolgt, auf eine niedrigere Gebläsedrehzahl eingestellt werden.

In allen gezeigten Ausführungsbeispielen kann eine Verfahrensführung vorgesehen sein, bei der in an sich bekannter Weise eine spaltweise automatische Türöffnung zur Trocknungsunterstützung bereits im Spülprogramm, nämlich im Programmschnitt TROCKNEN, vorgesehen ist. In diesem Fall ist die Türsteuerungsvorrichtung vorzugsweise auch dazu eingerichtet, die geöffnete Tür 60 oder zumindest die spaltweise geöffnete Tür 60 selbsttätig zu schließen. Es sind somit Schließmittel vorhanden, mit der die Tür 60 aus ihrer insbesondere spaltweisen offenen Stellung zurück in die verschlossene Stellung verbracht werden kann. Die Tür 60 wird vorzugsweise vor oder mit Abschluss des Spülprogramms mittels der Schließmittel wieder automatisch geschlossen.

### Bezugszeichenliste

- 1: Geschirrspülmaschine
- 2: Spülbehälter
- 3: Spülraum
- 4: Sprüheinrichtung
- 5: Sprüharm
- 6: Sammeltopf
- 7: Umwälzpumpe
- 8: Wasserweiche
- 9: Leitung
- 10: Ablaufleitung
- 11: Pumpe
- 12: Ablauf
- 13: Frischwasseranschluss
- 14: Frischwasserleitung
- 15: Flügelradzähler
- 16: Enthärter
- 17: Ventil
- 18: Wärmepumpeneinrichtung
- 19: Verflüssiger
- 20: Strömungskreislauf
- 21: Verdichter
- 22: Verdampfer
- 23: Expansionsorgan, Drossel
- 24: Wärmespeicher
- 25: Wasser
- 25a: Eis
- 26: Leitung
- 27: Ventil
- 28: Füllstandssensor
- 29: kommunikationstechnische Verbindung
- 30: Strömungskreislauf
- 31: Wärmetauscher
- 32: Überlaufleitung
- 33: Überlaufleitung
- 34: Entlüftung
- 35: Leitung
- 36: Ventil
- 37: Pumpe
- 40: Wassereinlauftasche
- 50: Wärmedämmung
- 51: Wärmedämmung
- 52: Wärmedämmung
- 60: Geschirrspülertür
- 61: Türspalt
- 62: Entlüftungsöffnung
- 70: Luftstrom
- 71: Luftstrom
- 72: Luftstrom
- 73: Lufteingangsöffnung
- 74: Luftausgangsöffnung
- 75: Luftzuführungskanal
- 76: Ventilatoreinheit
- 77: Luftabführungskanal
- 78: Höhenrichtung
- 100: Wärmerückgewinnungseinrichtung

## Patentansprüche

1. Geschirrspülmaschine (1), insbesondere Haushaltsgeschirrspülmaschine, zur Durchführung eines Spülprogramms, welches zumindest einen Programmabschnitt REINIGEN und einen Programmabschnitt TROCKNEN, mit dem das Spülprogramm abgeschlossen wird, umfasst, mit einem einen Spülraum (3) bereitstellenden Spülbehälter (2), der der Aufnahme von zu reinigendem Spülgut dient und zur Beschickung mit Spülgut eine Beschickungsöffnung aufweist, die mittels einer Tür (60) verschließbar ist, und mit einer Wärmepumpeneinrichtung (18) und einem Wärmespeicher (24), wobei die Wärmepumpeneinrichtung (18) dazu eingerichtet ist, dem Wärmespeicher (24) innerhalb des Programmabschnitts REINIGEN Wärme zu entziehen und der Spülflüssigkeit zuzuführen,
sowie mit einer Wärmerückgewinnungseinrichtung (100), mittels der Wärme aus dem Spülraum (3) dem Wärmespeicher (24) zuführbar ist,
**gekennzeichnet durch**
eine Türsteuerungsvorrichtung, welche dazu eingerichtet ist,
die Tür (60) zur Erwärmung der Temperatur im Spülraum (3) nach einer vorgegebenen Zeitdauer nach Abschluss des Spülprogramms automatisch zumindest spaltweise zu öffnen,
und/oder dazu eingerichtet ist,
die Tür (60) zur Erwärmung der Temperatur im Spülraum (3) temperaturgesteuert nach Abschluss des Spülprogramms automatisch zumindest spaltweise zu öffnen.

2. Geschirrspülmaschine nach Anspruch 1,
**dadurch gekennzeichnet, dass** der Wärmespeicher (24) ein mit einem fluiden Wärmespeichermedium (25) füllbarer oder gefüllter Tank ist.

3. Geschirrspülmaschine nach Anspruch 1 oder 2,
**dadurch gekennzeichnet, dass** die Wärmerückgewinnungseinrichtung (100) einen mit dem Spülbehälter (2) thermisch gekoppelten und diesem nebengeordneten oder einen innerhalb des Spülbehälters (2) angeordneten Wärmetauscher (31) aufweist.

4. Geschirrspülmaschine nach dem vorhergehenden Anspruch,
**dadurch gekennzeichnet, dass** Mittel (35, 36, 37, 75, 76, 77) vorhanden sind, um Wärme und/oder fluides Wärmespeichermedium (25) vom Wärmespeicher (24) zum Wärmetauscher (31) und umgekehrt zu überführen.

5. Geschirrspülmaschine nach einem der vorhergehenden Ansprüche,
**dadurch gekennzeichnet, dass**
der Wärmespeicher (24) an einen Luftzuführungskanal (75) und an einen Luftabführungskanal (77) strömungstechnisch angeschlossen ist, wobei der Luftzuführungskanal (75) und der Luftabführungskanal (77) jeweils anderendseitig in den Spülraum (3) einmünden.

6. Geschirrspülmaschine nach einem der vorhergehenden Ansprüche,
**gekennzeichnet durch**
einen, insbesondere am Gehäuse der Geschirrspülmaschine (1) angeordneten, Temperatursensor zur Erfassung einer Lufttemperatur außerhalb der Geschirrspülmaschine.

7. Geschirrspülmaschine nach einem der vorhergehenden Ansprüche,
**dadurch gekennzeichnet, dass** die Türsteuerungsvorrichtung dazu eingerichtet ist, die Tür (60), insbesondere die während des Programmabschnitts TROCKNEN spaltweise geöffnete Tür (60), selbsttätig zu schließen.

8. Verfahren zum Betrieb einer Geschirrspülmaschine (1), welche einen einen
Spülraum (3) bereitstellenden Spülbehälter (2) umfasst, der der Aufnahme von zu
reinigendem Spülgut dient und zur Beschickung mit Spülgut eine Beschickungsöffnung aufweist, die mittels einer, insbesondere verschwenkbar gelagerten,
Tür (60) verschließbar ist, sowie eine Wärmepumpeneinrichtung (18) und einen Wärmespeicher (24),
wobei das Verfahren folgende Schritte umfasst:
- Starten eines Spülprogramms
- Durchführen eines Programmschnitts REINIGEN, wobei das Spülgut mit Spülflüssigkeit gespült wird, wobei die Wärmepumpeneinrichtung (18) dem Wärmespeicher (24) zeitweise Wärme entzieht und der Spülflüssigkeit zuführt,
- Durchführen eines Programmschnitts TROCKNEN
- Abschließen des Spülprogramms
**dadurch gekennzeichnet, dass**
die Tür (60) zur Erwärmung der Temperatur im Spülraum (3) automatisch nach einer vorgegebenen Zeitdauer nach Abschluss des Spülprogramms zumindest spaltweise geöffnet wird
und/oder
dass die Tür (60) zur Erwärmung der Temperatur im Spülraum (3) automatisch nach Abschluss des Spülprogramms temperaturgesteuert zumindest spaltweise geöffnet wird.

9. Verfahren nach dem vorhergehenden Anspruch, bei dem die vorgegebene Zeitdauer 0,5 bis 3 Stunden beträgt.

10. Verfahren nach einem der vorhergehenden Ansprüche 8 bis 9, bei dem nach Abschluss des Spülprogramms, insbesondere wiederholt, eine Spülraumtemperaturmessung innerhalb des Spülbehälters (2), insbesondere im Sammeltopf (6), vorgenommen und mit einer Vergleichstemperatur verglichen wird, wobei die automatische Türöffnung ausgelöst wird, wenn die Spülraumtemperatur niedriger oder um einen vorgegebenen Wert niedriger ist als die Vergleichstemperatur.

11. Verfahren nach Anspruch 10, bei dem als Vergleichstemperatur eine vorgegebene Temperatur, eine gemessene Umgebungstemperatur oder eine zu Beginn des Spülprogramms gemessene Spülraumtemperatur verwendet wird.

12. Verfahren nach einem der Ansprüche 8 bis 11, bei dem die Tür (60) automatisch während des Programmschnitts TROCKNEN spaltweise geöffnet wird.

13. Verfahren nach dem vorhergehenden Anspruch, bei dem die Tür (60) nach Ablauf einer vorgegebenen Öffnungsdauer während des Programmschnitts TROCKNEN automatisch wieder geschlossen wird.

14. Verfahren nach einem der Ansprüche 8 bis 13, bei dem die Temperatur im Wärmespeicher (24) erfasst wird, wobei die Tür (60) vorzugsweise automatisch geschlossen wird, wenn die Temperatur im Wärmespeicher (24) einen vorgegebenen Wert überschreitet.

## Claims

1. Dishwasher (1), in particular a domestic dishwasher, for carrying out a washing program that has at least one CLEANING program portion and a DRYING program portion with which the washing program is completed, comprising a washing container (2) that provides a washing chamber (3), is used to receive washware to be cleaned and has a loading opening for loading washware which can be closed by means of a door (60), comprising a heat pump device (18) and a heat accumulator (24), the heat pump device (18) being designed to extract heat from the heat accumulator (24) and supply it to the washing liquid within the CLEANING program portion,
and comprising a heat recovery device (100), by means of which heat can be supplied from the washing chamber (3) to the heat accumulator (24),
**characterised by**
a door control apparatus that is designed to
automatically open the door (60), at least by a gap, after a predetermined period of time after the end of the washing program, in order to heat the temperature in the washing chamber (3), and/or is designed to
automatically open the door (60), at least by a gap, in a temperature-controlled manner after the end of the washing program, in order to heat the temperature in the washing chamber (3).

2. Dishwasher according to claim 1,
**characterised in that** the heat accumulator (24) is a reservoir that can be filled or is filled with a fluid heat storage medium (25).

3. Dishwasher according to either claim 1 or claim 2,
**characterised in that** the heat recovery device (100) has a heat exchanger (31) that is thermally coupled to the washing container (2) and is arranged next to or inside the washing container (2).

4. Dishwasher according to the preceding claim,
**characterised in that** means (35, 36, 37, 75, 76, 77) are provided for transferring heat and/or fluid heat storage medium (25) from the heat accumulator (24) to the heat exchanger (31) and vice versa.

5. Dishwasher according to any of the preceding claims,
**characterised in that**
the heat accumulator (24) is fluidically connected to an air supply duct (75) and to an air discharge duct (77), the air supply duct (75) and the air discharge duct (77) each opening into the washing chamber (3) at a different end.

6. Dishwasher according to any of the preceding claims,
**characterised by**
a temperature sensor, which is in particular arranged on the housing of the dishwasher (1), for detecting an air temperature outside the dishwasher.

7. Dishwasher according to any of the preceding claims,
**characterised in that** the door control apparatus is designed to automatically close the door (60), in particular the door (60) opened by a gap during the DRYING program portion.

8. Method for operating a dishwasher (1) comprising a washing container (2) that provides a washing chamber (3), is used to receive washware to be cleaned and has a loading opening for loading washware which can be closed by means of a door (60) that is in particular pivotably mounted, and a heat pump device (18) and a heat accumulator (24),
the method comprising the following steps:
- starting a washing program
- carrying out a CLEANING program portion, in which the washware is washed with washing liquid, the heat pump device (18) temporarily extracting heat from the heat accumulator (24) and supplying it to the washing liquid,
- carrying out a DRYING program portion
- completing the washing program
**characterised in that**
the door (60) is opened automatically, at least by a gap, after a predetermined period of time after the end of the washing program, in order to heat the temperature in the washing chamber (3),
and/or
**in that** the door (60) is opened automatically, at least by a gap, in a temperature-controlled manner after the end of the washing program, in order to heat the temperature in the washing chamber (3).

9. Method according to the preceding claim, wherein the predetermined period of time is 0.5 to 3 hours.

10. Method according to either of the preceding claims 8 to 9, wherein after the end of the washing program, in particular repeatedly, a washing chamber temperature is measured inside the washing container (2), in particular in a collecting vessel (6), and compared with a comparison temperature, wherein the automatic door opening is triggered if the washing chamber temperature is lower than the comparison temperature or lower than the comparison temperature by a predetermined value.

11. Method according to claim 10, wherein a predetermined temperature, a measured ambient temperature or a washing chamber temperature measured at the start of the washing program is used as the comparison temperature.

12. Method according to any of claims 8 to 11, wherein the door (60) is automatically opened by a gap during the DRYING program portion.

13. Method according to the preceding claim, wherein the door (60) is automatically closed again after a predetermined opening time has elapsed during the DRYING program portion.

14. Method according to any of claims 8 to 13, wherein the temperature in the heat accumulator (24) is detected, wherein the door (60) is preferably automatically closed if the temperature in the heat accumulator (24) exceeds a predetermined value.

## Revendications

1. Lave-vaisselle (1), en particulier lave-vaisselle domestique, permettant de réaliser un programme de lavage, lequel comprend au moins une section de programme NETTOYAGE et une section de programme SÉCHAGE, avec laquelle le programme de lavage est terminé, comportant un réservoir de lavage (2) fournissant un espace de lavage (3), lequel serve à recevoir des articles à laver et comporte une ouverture de chargement permettant de charger des articles à laver, laquelle peut être fermée au moyen d'une porte (60), et comportant un dispositif de pompe à chaleur (18) et un accumulateur de chaleur (24), dans lequel le dispositif de pompe à chaleur (18) est conçu pour extraire de la chaleur de l'accumulateur de chaleur (24) pendant la section de programme NETTOYAGE et pour amener du liquide de lavage, ainsi que comportant un dispositif de récupération de chaleur (100) au moyen duquel de la chaleur provenant de l'espace de lavage (3) peut être amenée à l'accumulateur de chaleur (24),
**caractérisé par**
un dispositif de commande de porte, lequel est conçu pour
ouvrir automatiquement la porte (60), manière à être au moins entrouverte, après une période de temps prédéfinie après la fin du programme de lavage, pour réchauffer la température dans l'espace de lavage (3),
et/ou conçu pour
ouvrir automatiquement la porte (60) , de manière à être au moins entrouverte, après la fin du programme de lavage, pour réchauffer, par commande de température, la température dans l'espace de lavage (3) .

2. Lave-vaisselle selon la revendication 1,
**caractérisé en ce que** l'accumulateur de chaleur (24) est un réservoir pouvant être rempli ou rempli d'un milieu accumulateur de chaleur fluide (25).

3. Lave-vaisselle selon la revendication 1 ou 2,
**caractérisé en ce que** le dispositif de récupération de chaleur (100) comporte un échangeur de chaleur (31) accouplé thermiquement au compartiment de lavage (2) et disposé à côté de celui-ci ou disposé à l'intérieur du compartiment de lavage (2).

4. Lave-vaisselle selon la revendication précédente,
**caractérisé en ce que** des moyens (35, 36, 37, 75, 76, 77) sont fournis pour transférer de la chaleur et/ou un milieu accumulateur de chaleur (25) fluide de l'acumulateur de chaleur (24) vers l'échangeur de chaleur (31) et vice versa.

5. Lave-vaisselle selon l'une quelconque des revendications précédentes,
**caractérisé en ce que**
l'accumulateur de chaleur (24) est raccordé fluidiquement à un canal d'amenée d'air (75) et à un canal d'évacuation d'air (77), dans lequel le canal d'amenée d'air (75) et le canal d'évacuation d'air (77) débouchent respectivement dans l'espace de lavage (3) au niveau de l'autre extrémité.

6. Lave-vaisselle selon l'une quelconque des revendications précédentes,
**caractérisé par** un capteur de température, en particulier disposé sur le boîtier du lave-vaisselle (1) permettant de détecter une température de l'air à l'extérieur du lave-vaisselle.

7. Lave-vaisselle selon l'une quelconque des revendications précédentes,
**caractérisé en ce que** le dispositif de commande de porte est conçu pour fermer automatiquement la porte (60), en particulier la porte (60) entrouverte pendant la section de programme SÉCHAGE.

8. Procédé permettant de faire fonctionner un lave-vaisselle (1), lequel comprend un compartiment de lavage (2) fournissant un espace de lavage (3), lequel serve à recevoir des articles à laver et comporte une ouverture de chargement permettant de charger des articles à laver, laquelle peut être fermée au moyen d'une porte (60), en particulier montée de manière à pouvoir pivoter, ainsi qu'un dispositif de pompe à chaleur (18) et un accumulateur de chaleur (24),
dans lequel le procédé comprenant les étapes suivantes :
- le démarrage d'un programme de lavage
- la réalisation d'une section de programme NETTOYAGE, dans lequel les articles à laver sont lavés à l'aide du liquide de lavage, dans lequel le dispositif de pompe à chaleur (18) extrait temporairement de la chaleur de l'accumulateur de chaleur (24) et l'amene au liquide de lavage,
- la réalisation d'une section de programme SÉCHAGE
- la fin du programme de lavage
**caractérisé en ce que**
la porte (60) est automatiquement ouverte, de manière à être au moins entrouverte, après une période de temps prédéterminée après la fin du programme de lavage, pour réchauffer la température dans l'espace de lavage (3)
et/ou
que la porte (60) est automatiquement ouverte, de manière à être au moins entrouverte, après la fin du programme de lavage, pour réchauffer, par commande de température, la température dans l'espace de lavage (3).

9. Procédé selon la revendication précédente, dans lequel la période de temps prédéfinie est de 0,5 à 3 heures.

10. Procédé selon l'une quelconque des revendications précédentes 8 à 9, dans lequel, après la fin du programme de lavage, en particulier de manière répétée, une mesure de température de l'espace de lavage est réalisée à l'intérieur du compartiment de lavage (2), en particulier dans un pot de collecte (6), et comparée à une température de comparaison, dans lequel l'ouverture automatique de porte est déclenchée lorsque la température de l'espace de lavage est inférieure ou inférieure d'une valeur prédéfinie à la température de comparaison.

11. Procédé selon la revendication 10, dans lequel une température prédéfinie, une température ambiante mesurée ou une température d'espace de lavage mesurée au début du programme de lavage est utilisée comme température de comparaison.

12. Procédé selon l'une quelconque des revendications 8 à 11, dans lequel la porte (60) est automatiquement ouverte de manière à être au moins entrouverte pendant la section de programme SÉCHAGE.

13. Procédé selon la revendication précédente, dans lequel la porte (60) est automatiquement refermée après l'écoulement d'un temps d'ouverture prédéfini pendant la section de programme SÉCHAGE.

14. Procédé selon l'une quelconque des revendications 8 à 13, dans lequel la température dans l'accumulateur de chaleur (24) est détectée, dans lequel la porte (60) est de préférence automatiquement fermée lorsque la température dans l'accumulateur de chaleur (24) est supérieure à une valeur prédéfinie.
